Europäisches Patentamt

European Patent Office

Office européen des brevets

(19)

(11) **EP 0 969 145 B1**

(12) **EUROPEAN PATENT SPECIFICATION**

(45) Date of publication and mention
of the grant of the patent:
**26.06.2002 Bulletin 2002/26**

(51) Int Cl.⁷: **D21G 1/02**, F16C 13/00

(21) Application number: **99116053.2**

(22) Date of filing: **08.03.1995**

(54) **Method for fitting the roll mantle of a tubular roll intended for a paper machine or equivalent with glide bearings and a tubular roll that makes use of the method**

Verfahren zum Positionieren des Rollmantels einer rohrförmigen Rolle, zum Gebrauch in einer Papier-oder ähnlichen Maschine, mittels Gleitlager und eine Rolle zur Durchführung des Verfahrens

Procédé de positionnement de l'enveloppe d'un rouleau tubulaire, utilisé dans une machine à papier ou équivalent, au moyen de paliers à glissement et rouleau tubulaire utilisant le procédé

(84) Designated Contracting States:
**AT CH DE FR GB IT LI SE**

(30) Priority: **09.03.1994 FI 941107**
**29.04.1994 FI 941991**
**22.02.1995 FI 950814**

(43) Date of publication of application:
**05.01.2000 Bulletin 2000/01**

(62) Document number(s) of the earlier application(s) in
accordance with Art. 76 EPC:
**95103326.5 / 0 672 786**

(73) Proprietor: **Metso Paper, Inc.**
**00130 Helsinki (FI)**

(72) Inventors:
• **Niskanen, Juhani**
**90640 Oulunsalo (FI)**

• **Kivioja, Pekka**
**40950 Muurame (FI)**
• **Lahtinen, Juha**
**40720 Jyväskylä (FI)**
• **Lensu, Esa**
**40530 Jyväskylä (FI)**
• **Salavamäki, Esa**
**40950 Muurame (FI)**

(74) Representative: **Grams, Klaus Dieter, Dipl.-Ing.**
**Patentanwaltsbüro**
**Tiedtke-Bühling-Kinne & Partner**
**Bavariaring 4-6**
**80336 München (DE)**

(56) References cited:
**DE-A- 3 941 965**     **GB-A- 2 036 252**
**US-A- 4 480 452**     **US-A- 4 651 547**
**US-A- 4 984 343**     **US-A- 5 060 357**
**US-A- 5 111 563**

**Description**

The invention concerns a method for fitting a tubular roll mantle of a roll intended for a paper machine or equivalent with glide bearings, in which method the roll mantle is supported on a stationary roll axle by means of hydraulic glide bearing elements acting upon the roll mantle or upon the roll ends, said bearing elements being loaded hydraulically by means of the pressure of a pressure medium.

Further, the invention concerns a method for fitting a tubular roll mantle of a roll intended for a paper machine or equivalent with glide bearings, in which method the roll mantle is supported on a stationary roll axle by means of hydraulic glide bearing elements acting upon the roll mantle or upon the roll ends, said bearing elements being loaded hydraulically by means of a pressure medium, and said roll being loaded radially in the direction of at least one plane, i.e. in the so-called principal loading direction.

Further, the invention concerns a tubular roll that makes use of the method for a paper machine or equivalent, the roll mantle of said roll being supported revolvingly on a stationary roll axle by means of glide bearing elements that act upon the inner face of the roll mantle and/or upon the roll ends, said glide bearing elements being loaded by means of the pressure of a hydraulic pressure medium.

Further, the invention concerns a tubular roll that makes use of the method in accordance with the invention for a paper machine or equivalent, the roll mantle of said roll being supported revolvingly on a stationary roll axle by means of glide bearing elements that act upon the inner face of the roll mantle and/or upon the roll ends, said glide bearing elements being loaded by means of the pressure of a hydraulic pressure medium, and said roll being loaded radially in the direction of at least one plane, i.e. in the so-called principal loading direction.

The tubular rolls in paper machines are ordinarily mounted on the roll axle by the ends of the roll mantle by means of roller bearings. Such a conventional mode of journalling has its advantages, for example the fact that the journalling can be accomplished quite simply, and so far its costs have been considered to be relatively moderate. Such a conventional mode of journalling, in which the roll mantle is journalled on the axle permanently by its ends, is, however, not suitable for even nearly all objects of use in paper machines. In quite a number of cases, the roll mantle must be able to move radially in relation to the roll axle, which property is quite often required, e.g., from variable-crown rolls which are in nip contact with a back-up roll. Besides the fact that, by means of the crown variation means in a variable-crown roll, attempts are made to shape the roll mantle in the desired way especially in view of regulation of the profile of linear load, the roll ends must also be able to move in the radial direction in relation to the axle in order that the profile of linear load could also be controlled in the end areas of the roll. In addition to the profile-regulation properties in the end areas of the roll, the regulation of the loading in the end areas of the roll also affects the control of the temperatures in the end areas of the roll.

This is why such rolls have also been developed in which the whole roll mantle can move in the direction of loading radially in relation to the roll axle. One roll of this type is described in the applicant's earlier **EP Patent No. 0,332,594,** wherein the end bearings of the variable-crown roll are not mounted directly on the central axle of the roll, but the bearings are fitted on separate annular parts, which can move radially in relation to the roll axle. The variable-crown roll in accordance with said publication is a nip roll, and the radial movement of the roll mantle is confined to the direction of the nip plane. The movement has been accomplished so that hydraulic power units have been fitted between said annular parts and the roll axle, which power units shift the end bearings by means of a hydraulic pressure medium towards the nip or away from the nip. The principal object of this solution is to open and to close the nip. There is also a great number of other rolls of similar type, which produce a substantially corresponding action while being accomplished by means of a somewhat different technique.

The fitting of a roll with roller bearings also produces considerable drawbacks and/or problems for the manufacture and operation of the roll. It is one drawback that the roller bearings require certain machining of the roll mantle. The wear of the bearings may also result in problems and, further, the roller bearings impose their restrictions in respect of the oil or fluid to be used in the roll. For example, the following properties can be considered as the weak points of the conventional mode of journalling.

- Restrictions of speed: Even at present, the speeds of rotation of the rolls exceed the maximum permitted speeds specified by bearing manufacturers.

- Precision of rolling: With the present technology, it is very difficult to increase the rolling precision of an assembled roll further. In a traditional roll, even if all the components (bearings, bearing spaces, outer face of mantle) are machined as precisely as possible, the defects are summed up in an assembled roll.

Fitting of a roll mantle with glide bearings is also known in the prior art. Such rolls with glide bearings are described, e.g., in the US Patents **5,060,357** and **5,111,563.** In the roll in accordance with the US Patent **5,060,357**, the roll mantle is provided with roller bearings fitted in the areas of its end pieces, said bearings being fitted on separate ring parts of a type similar to those described in said EP Patent **0,332,594.** The roll is meant to be a nip roll, and its roll mantle can move in the direction of the nip plane in relation to the axle, e.g., for the purpose of opening and closing the nip. The lateral support of the roll mantle, i.e. the support in the direction transverse to the nip plane, is arranged by means of quite a complicated construction of glide bearings, by whose means attempts are made to make the movement of the roll mantle take place exactly in the direction of the nip plane. It is a drawback of the construction that it is exactly complicated, for example, with a number of glide faces and arrangements of articulated joints, for which reason the reliability in operation, controllability, and the dependability of the construction cannot be considered to be very good. It is a further problem of the solution in accordance with the US Patent **5,060,357** that, by means of the equipment, for example, forces transverse to the nip plane and applied to the roll from outside cannot be compensated for, because such forces cause a disruption of the oil film between the glide shoes and the inner face of the roll mantle.

In the US Patent **5,111,563,** an arrangement of lateral support of a roll with glide bearings is described, which arrangement is simpler than the solution of the US Patent mentioned above earlier. In this solution, the arrangement of the glide bearings in the lateral direction is, however, accomplished by means of an arrangement of articulated joints that is likewise not capable of compensating for lateral forces applied to the roll from outside.

The object of the present invention is to provide a method of a novel type for fitting the roll mantle of a tubular roll intended for a paper machine or equivalent with glide bearings and a tubular roll that makes use of the method, by means of which method and roll some of the drawbacks involved in the prior art are avoided and by whose means, at the same time, an essential improvement is achieved as compared with existing methods and constructions as well as compared with the controllability of existing rolls.

In view of achieving this, a first embodiment of the method in accordance with the present invention is mainly characterized in that the roll mantle is supported on the roll axle by means of glide bearing elements acting radially and/or axially in opposite directions, so that, when an outside force that shifts or attempts to shift the roll mantle is applied to the roll mantle, the pressure in the glide bearing element placed at the side of the higher loading is adjusted to a level higher than the pressure in the glide bearing element acting in the opposite direction so that the outside forces are neutralized.

An alternative embodiment of the method in accordance with the present invention is mainly characterized in that the roll mantle is supported on the roll axle by means of glide bearing elements acting radially and/or axially in opposite directions so that, in the first direction of support, the roll mantle is supported by means of one or several glide bearing elements, which are mounted on the roll axle stationarily in relation to said direction of support, and in the opposite direction of support the roll mantle is supported by means of at least one glide bearing element, which is displaceable in relation to the roll axle in said direction of support and whose effective area is substantially smaller than that of the glide bearing element acting in the first direction of support.

A third embodiment of the method in accordance with the invention is characterized in that the roll mantle is supported on the roll axle by means of glide bearing elements acting radially in opposite directions in the principal loading direction, so that the roll mantle is allowed to be shifted over a certain distance in said principal loading direction, in which case, when the roll mantle approaches its preset extreme position in this direction, the movement of the roll mantle is braked down and finally the movement is stopped in its extreme position by means of the glide bearing elements.

A fourth embodiment of the method in accordance with the invention is mainly characterized in that the roll mantle is supported on the roll axle by means of glide bearing elements, which act radially substantially in the principal loading direction in opposite directions and which are provided with means for regulation of the braking pressure, so that, in said principal loading direction, the roll mantle is allowed to move over a certain distance, whereby, when the roll mantle approaches its preset extreme position in said direction, the movement of the roll mantle is braked down by means of the device for regulation of the braking pressure, and finally the movement is stopped in its extreme position by means of the glide bearing elements.

On the other hand, a first embodiment of the roll that makes use of the method is mainly characterized in that the roll mantle is supported on the roll axle by means of glide bearing elements loaded radially and/or axially in opposite directions, which glide bearing elements are connected with a regulation device or with a corresponding regulation valve, which is arranged to distribute the pressures in the glide bearing elements acting in opposite directions so that the force components of the forces applied to the roll mantle from outside that are parallel to the directions of action of the glide bearing elements are neutralized.

On the other hand, a second embodiment of the roll that makes use of the method is mainly characterized in that the roll mantle is supported on the roll axle by means of glide bearing elements loaded radially and/or axially in opposite directions, of which elements the glide bearing elements acting in the first direction of support are mounted on the roll axle as stationary in said direction of support, and the glide bearing elements acting in the opposite direction of support are displaceable in relation to the roll axle in said direction of support, and that the area of said glide bearing elements that are mounted stationarily is substantially larger than the area of the glide bearing elements that are mounted displaceably.

A third embodiment of the roll that makes use of the method is characterized in that the roll mantle is supported on the roll axle by means of glide bearing elements that are loaded radially in opposite directions in the principal loading direction, which glide bearing elements are connected with a regulation device or with a corresponding regulation valve, which is arranged to distribute the pressures in the glide bearing elements acting in opposite directions so that a certain preset maximum movement of shifting is permitted for the roll mantle, in which case, when the roll mantle approaches its extreme position, the regulation device or the corresponding regulation valve is fitted to control the pressure to the glide bearing elements so as to brake down the movement of the roll mantle and finally to stop the roll mantle in its extreme position.

On the other hand, a fourth embodiment of the roll that makes use of the method is mainly characterized in that the roll mantle is supported on the roll axle by means of glide bearing elements, which are loaded radially substantially in the principal loading direction in opposite directions and each of which is connected with a braking-pressure regulation device of its own, so that a certain maximal shifting movement is permitted for the roll mantle, whereby, when the roll mantle approaches its extreme position, the braking-pressure regulation device is arranged to feed the braking pressure into the glide bearing elements so as to brake down the movement of the roll mantle and finally to stop the movement of the roll mantle in its extreme position.

By means of the present invention, a number of remarkable advantages are obtained, compared with the prior art, and of these advantages, in this connection, for example, the following should be stated. The mode of journalling by means of glide bearings in accordance with the invention permits controlled movements of the roll mantle without outside control. Further, by means of the solution, a very precise positioning of the roll mantle is achieved. The glide bearing arrangement automatically adjusts the position of the roll mantle to the correct position if, for some reason, the position of the mantle differs from its preset value. The journalling of the roll is accomplished by means of hydraulic glide bearing elements so that, owing to the mode of regulation, the consumptions of fluid and power are very low. Owing to the mode of mounting by means of glide bearings, the forces acting from the glide bearing elements upon the roll mantle can also be easily minimized. Further, the mode of journalling by means of glide bearings in accordance with the invention protects the fluid films of the glide bearing elements also in the areas of extreme positions of the roll mantle. The mode of carrying out is, in the present invention, quite simple and, thus, reliable in operation. The further advantages and characteristic features of the invention come out from the following detailed description of the invention.

In the following, the invention will be described by way of example with reference to the figures in the accompanying drawing.

Figure 1 is a fully schematic sectional side view of a roll fitted with glide bearings in accordance with the invention, which roll is a variable-crown roll in the exemplifying embodiment shown in Fig. 1.

Figure 2 is a schematic sectional view taken along the line II-II in Fig. 1.

Figure 2A is a schematic perspective view of an exemplifying embodiment of a preferred construction of the axial support.

Figure 3 is a more detailed and partly sectional view of a first embodiment of the lateral support of a roll fitted with glide bearings in accordance with the invention.

Figure 3A is a more detailed illustration of a regulation device used for the lateral support of the roll mantle of the roll as shown in Fig. 3.

Figure 4 is an illustration corresponding to Fig. 3 of a second embodiment of the lateral support of the roll mantle.

Figure 5 is an illustration corresponding to Figs. 3 and 4 of a third embodiment of the lateral support of the roll mantle.

Figure 6 is an illustration corresponding to Figs. 3 to 5 of a fourth embodiment of the lateral support of the roll mantle.

Figures 7A and 7B are more detailed partial sectional views of alternative exemplifying embodiments of the lateral support of the roll mantle of a roll in accordance with the invention.

Figure 8 is a schematic and partly sectional view of a first embodiment of the support of the roll mantle and of the control of the movements of the roll mantle in the direction of loading of the roll.

Figure 9 is an illustration corresponding to Fig. 8 of a second embodiment of the support of the roll mantle in the direction of loading.

Figure 10 is an illustration corresponding to Figs. 8 and 9 of a third embodiment of the support of the roll mantle in the direction of loading.

Figure 11 is an illustration corresponding to Figs. 8 to 10 of a fourth embodiment of the support of the roll mantle in the direction of loading.

Figure 12 is a sectional view corresponding to Figs. 8 to 11 of a further embodiment of the support of the roll mantle and of the control of its movements in the so-called principal loading direction.

Figure 12A is a more detailed illustration of the regulation device used for the support as illustrated in Fig. 12 and of its mechanical positive control.

Figure 13 shows a construction alternative to the embodiment shown in Fig. 2, in which construction it is possible to use a support solution as shown in Fig. 12.

Figure 14 is a fully schematic illustration of a position to which the roll in accordance with the invention can be applied.

Figure 15 is an axial and partly sectional view of the axial support of the roll mantle and of the control of the movements of the roll mantle in the axial direction.

Figure 16 is an illustration corresponding to Fig. 15 of a second embodiment of the axial support of the roll mantle.

Figure 17 is an illustration corresponding to Figs. 15 and 16 of a third embodiment of the axial support of the roll mantle.

Figure 18 is an illustration corresponding to Figs. 15 to 17 of a fourth embodiment of the axial support of the roll mantle.

Figures 19A and 19B are more detailed partial sectional views of preferred alternative exemplifying embodiments of the axial support of the roll mantle of a roll in accordance with the invention.

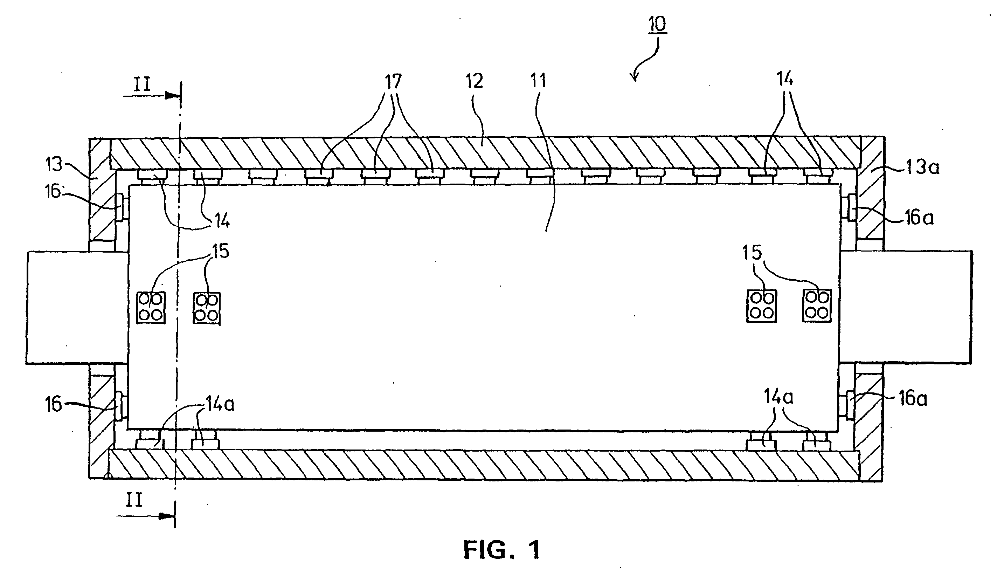

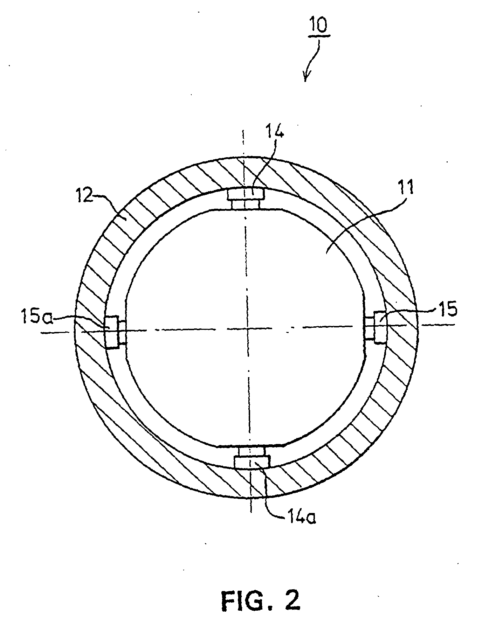

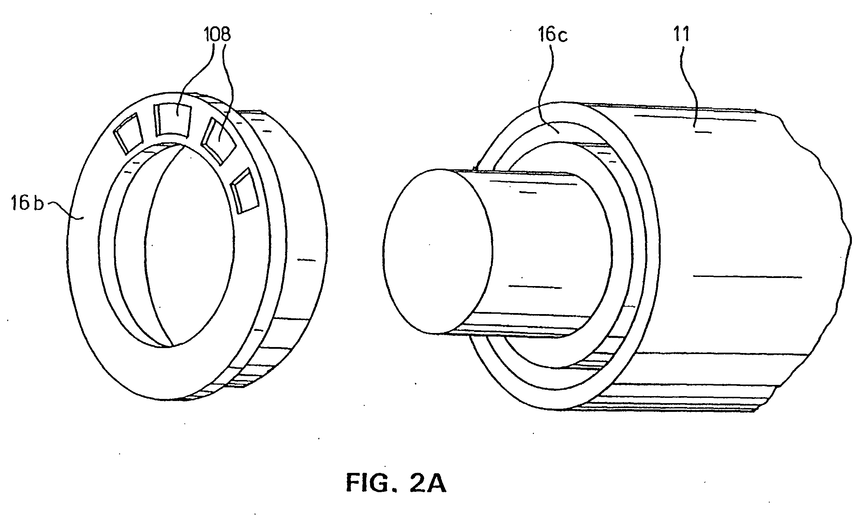

Thus, Figs. 1 and 2 are fully schematic sectional views of a tubular roll fitted with glide bearings in accordance with the invention so that Fig. 1 is an axial sectional view in the vertical plane of the roll, and Fig. 2 is a sectional view of the roll as shown in Fig. 1, taken along the line II-II. In Figs. 1 and 2, the roll is denoted generally with the reference numeral 10, and in these embodiments the roll 10 is a variable-crown roll, which comprises a stationary roll axle 11, on which the roll mantle 12 is fitted revolving, said roll mantle being supported on the roll axle by means of hydraulic loading elements 17. The hydraulic loading elements 17 are effective in the direction of the nip plane, and by their means it is possible to adjust the shape of the roll mantle 12 and to control the nip profile of the roll in the axial direction of the roll.

The roll 10 as shown in Figs. 1 and 2 is a roll provided exclusively with glide bearings, so that the roll 10 has no conventional roller bearings fitted at the roll ends at all. The journalling of the roll 10 has been accomplished by means of glide bearing elements, of which elements the glide bearing elements that are effective in the direction of loading, i.e. in the direction of the nip plane in the case of the roll as shown in Figs. 1 and 2, are denoted with the reference numerals 14 and 14a. The first glide bearing elements 14 are effective in the direction of the nip, i.e. against the loading, and the second glide bearing elements 14a in the opposite direction. In the exemplifying embodiment shown in Figs. 1 and 2, it is shown further that the roll 10 is also provided with glide bearing elements 15,15a effective in the direction transverse to the loading direction, said elements 15,15a being effective in opposite directions. Since the roll 10 is a roll that is fitted exclusively with glide bearings, it is also provided with glide bearing elements 16,16a effective in the axial direction in opposite directions, said elements 16,16a being supported by the intermediate of a fluid film against the roll ends 13,13a. As is shown in Figs. 1 and 2, the glide bearing elements 14,15,14a,15a effective in the radial direction are supported against the inner face of the roll mantle 12 by the intermediate of a fluid film. In the illustration of Fig. 1, the glide bearing elements 14,14a,15,15a effective in the radial direction are arranged in pairs so that there are two pieces of each glide bearing element, which are placed side by side in the axial direction. In view of the operation, such an arrangement is, however, not an indispensable requirement, for the journalling can also be accomplished, for example, by means of single glide bearing elements alone.

On the other hand, in Fig. 2 it is shown that the glide bearing elements 14,14a,15, 15a are arranged to act in the direction of loading and in the direction transverse to said direction. However, there may also be a higher number of glide bearing elements, which are fitted to act radially in different angular positions. Regarding the axial glide bearing elements, it can be stated further that, differing from Fig. 1, the axial movements of the roll mantle 12 can be controlled by means of just single glide bearing elements 16,16a alone, which are effective in the same plane in opposite directions. On the other hand, there may also be a higher number of such axial glide bearing elements 16,16a, which are, for example, uniformly spaced to act upon the inner faces of the roll ends 13,13a.

In Fig. 2A, a more favourable embodiment of the axial glide bearing elements is shown. According to this embodiment, the axial glide-bearing shoes 16b are annular glide bearings, into whose support face, which is supported against the roll end 13,13a, fluid pockets 108 have been formed. Similarly, into the roll axle 11, an annular groove 16c has been formed, in which the "piston part" of the glide bearing element 16b is fitted. The axial support can also be arranged so that glide bearing elements 16b are supported against the same roll end 13 from opposite sides, in which case axial glide bearings are not needed at the opposite end of the roll.

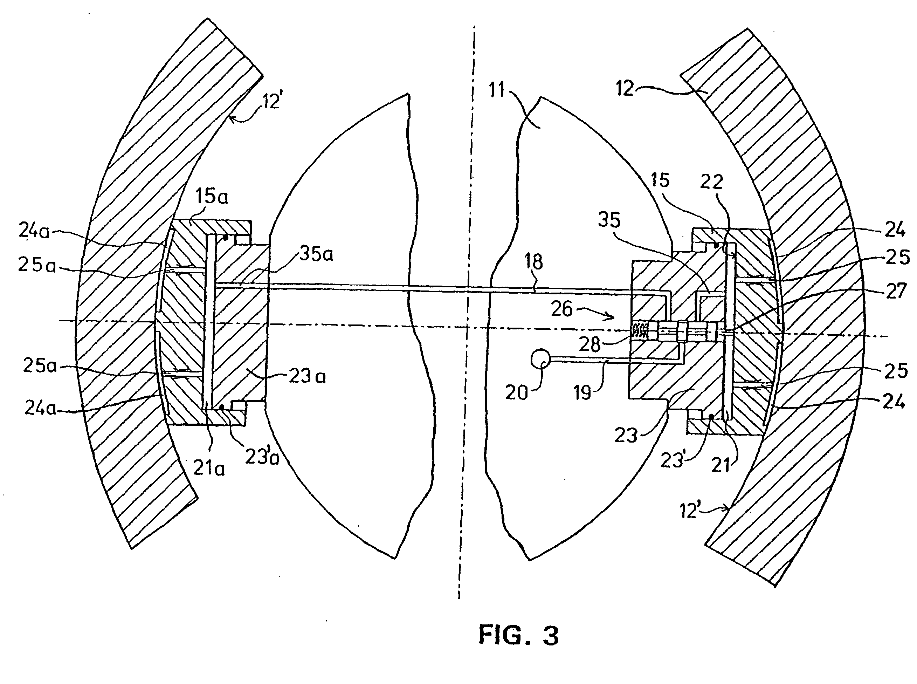

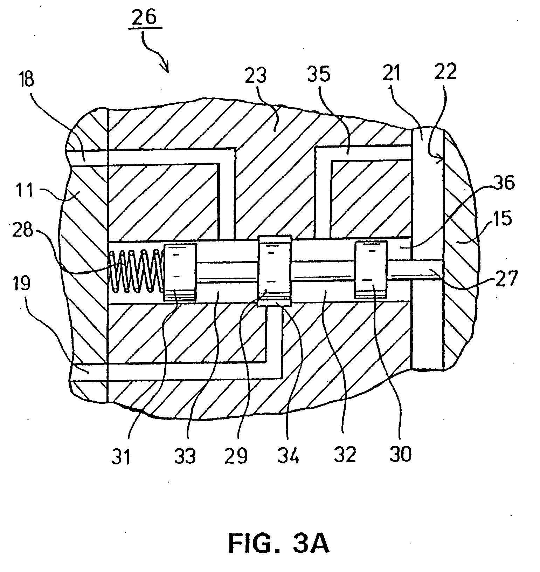

Fig. 3 is a schematic sectional view of a first embodiment of the support of the roll mantle 12 in the direction transverse to the loading direction. As is the case in Figs. 1 and 2, so also in Fig. 3, the roll mantle is denoted with the reference numeral 12 and the roll axle with the reference numeral 11. To begin with, the general construction of the solution used for lateral support of the roll mantle 12 will be described. As was already stated earlier, the roll mantle 12 is supported on the roll axle 11 by means of bearing shoes 15,15a fitted in the direction transverse to the loading direction, which bearing shoes 15,15a act in opposite directions. As regards their operation, the glide bearing elements 15,15a are conventional, so that said glide bearing elements 15,15a are supported against the inner face 12' of the roll mantle by the intermediate of a fluid film.

In the illustration in Fig. 3, frame pieces 23,23a are mounted on the roll axle 11, and the glide bearing elements 15,15a are provided with cavity spaces 21,21a to be pressurized by means of a hydraulic pressure medium, said frame pieces 23,23a being fitted to penetrate into said cavity spaces. The frame pieces 23,23a are sealed by means of the seals 23',23'a in relation to the cavity spaces 21,21a in the glide bearing elements 15,15a. Into the outer faces of the glide bearing elements 15,15a, fluid pockets 24,24a have been formed in the conventional way, which fluid pockets communicate through capillary bores 25,25a with the cavity spaces 21,21a to be pressurized. Thus, pressure medium that is used for the loading of the glide bearing elements 15,15a passes out of the cavity spaces 21,21a through the capillary bores 25,25a into the fluid pockets 24,24a to form a fluid film between the glide bearing elements 15,15a and the inner face 12' of the roll mantle. The pressure medium used for the loading of the glide bearing elements 15,15a is introduced into the roll along the central duct 20, from it is passed to the glide bearing elements 15,15a through the feed duct 19. The feed duct 19 does, however, not communicate directly with the glide bearing elements 15,15a, but the roll is provided with a regulation device 26, which distributes the pressure medium to the glide bearing elements 15,15a.

In the embodiment of Fig. 3, said regulation device 26 is fitted in the frame piece 23 of the first glide bearing element 15, and from this regulation device 26 the pressure medium is passed into the cavity space 21 of the first glide bearing element 15 along the pressure duct 35, and into the cavity space 21a of the second glide bearing element 15a along the connecting duct 18 and along the pressure duct 35a which has been formed into the frame piece 23a of the second glide bearing element 15a.

The construction and the operation of the regulation device 26 are described in more detail in relation to Fig. 3A. The regulation device 26 comprises a valve, which is composed of a three-part slide 29,30,31 fitted in the bore 36 which has been formed into the frame piece 23 of the first glide bearing element 15. The middle part 29, the first end part 30, and the second end part 31 of the slide communicate with one another through the spindle 27, and said slide parts 29,30,31 are placed at a distance from one another so that flow passages 32,33 for the pressure medium remain between the slide parts. The first flow passage 32 communicates through the pressure duct 35 with the cavity space 21, and in a corresponding way, the second flow passage 33 communicates with the cavity space 21a of the second glide bearing element 15a through the connecting duct 18 and through the pressure duct 35a that has been formed into the frame piece 23a of the second glide bearing element 15a. Behind the three-part slide 29,30,31 of the regulation device 26, on the bottom of the bore 36, a spring 28 has been installed, which loads the slide 29,30,31 towards the glide bearing element 15 so that the spindle 27 is supported against the bottom 22 of the cavity space. The pressure medium is passed to the regulation device 26 along the feed duct 19, and into the bore 36 an annular groove 34 has been formed at the level of the feed duct 19, through which groove 34 the pressure medium has access in the desired way, through the first and/or the second flow passage 32/33, into the cavity space 21,21a of the first and/or the second glide bearing element. This is just one exemplifying embodiment of a slide construction. In consideration of the same functions, the slide may also be constructed in a different way.

By means of the regulation device 26, as was stated above, the lateral forces applied to the roll are neutralized. The regulation device 26 has been accomplished so that through it the pressure of the pressure medium is controlled to each glide bearing element 15,15a so that a higher pressure is passed to the side of loading to shift the roll mantle 12 against the outside loading. When Fig. 3A is examined, it can be seen that, if an outside loading is applied against the direction of loading of the first glide bearing element 15, the three-part slide 29,30,31 is pushed in Fig. 3A against the spring 28 force to the left, opens the first flow passage 32 and closes the second flow passage 33. In such a case, the pressure of the pressure medium coming from the feed duct 19 is passed through the first flow passage 32 and through the pressure duct 35 into the cavity space 21 of the first glide bearing element 15, at the same time as the middle part of the slide prevents access of the pressure into the cavity space 21a of the second glide bearing element 15a. Thus, a higher pressure is passed into the cavity space 21 of the first glide bearing element 15, whereby said pressure corrects the position of the mantle to the correct position.

The construction of the regulation device 26 is such that even a very little movement of the roll mantle 12 controls the flow and the pressure in the desired way. As is shown in Fig. 3A, this is accomplished simply so that the axial length of the middle part 29 of the slide is slightly shorter than the axial length of the annular groove 34 that has been formed into the bore 36. When the length of the middle part 29 of the slide is substantially equal to the axial length of the annular groove 34 that has been formed into the bore 36, for example, by means of the shape of the middle part 29 of the slide as shown in the figure, it is achieved that, in the middle position shown, fluid has access to both of the glide bearing elements 15,15a. Immediately when the slide 29,30,31 is shifted away from the middle position shown in Fig. 3A, the flow passage is opened to one of the cavity spaces 21,21a, at the same time as the flow passage to the opposite cavity space is closed. Thus, the regulation device 26 reacts immediately and without delay to the movements of the roll mantle 12.

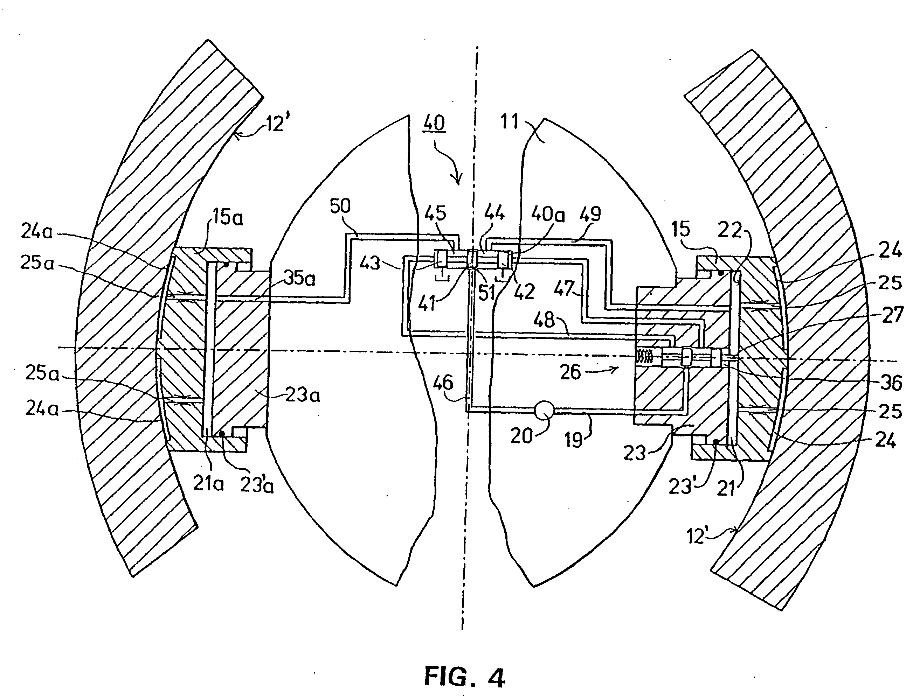

Fig. 4 shows a second embodiment of the lateral support of the roll mantle in a roll fitted with glide bearings. The solution shown in Fig. 4 differs from that shown in Fig. 3 in the respect that the embodiment of Fig. 4 is provided with a pre-control of the lateral support, and therefore the solution will be described here in its entirety. Also, in Fig. 4, the roll mantle of the roll fitted with glide bearings is denoted with the reference numeral 12, and the roll axle with the reference numeral 11. Also in this embodiment, the roll is provided with glide bearing elements 15,15a acting in the direction transverse to the loading direction and, as in the embodiment of Fig. 3, also acting in directions opposite to one another. The glide bearing elements 15,15a comprise a frame piece 23,23a, which is attached to the roll axle 11 and on which the glide bearing element 15,15a itself is fitted so that the frame piece 23,23a penetrates into the cavity space 21,21a that has been formed into the glide bearing element 15,15a and that can be pressurized, the frame piece 23,23a being sealed by means of the seal 23',23'a in relation to said cavity space 21,21a. Into the outer face of the glide bearing elements 15,15a, oil pockets 24,24a have been formed, which communicate with the pressurized cavity space 21,21a in the glide bearing element through the capillary bores 25,25a. Pressure medium that is used for pressurizing the glide bearing elements 15,15a, in particular oil, is passed through the capillary bores 25,25a into the oil pockets 24,24a to form a fluid film between the glide bearing elements 15,15a and the inner face 12' of the roll mantle.

Into the frame piece 23 of the first glide bearing element 15, a regulation device 26 similar to that described in connection with the embodiments shown in Figs. 3 and 3A has been formed. Thus, said regulation device 26 comprises a bore 36, which has been formed into the frame piece 23 of the first glide bearing element 15 and into which a three-part slide 29,30,31 has been fitted in the way shown in Fig. 3A. The slide 29,30,31 is provided with a spindle 27, which rests against the bottom 22 of the cavity space in the first glide bearing element, and a spring 28 is fitted on the bottom of the bore 36, which spring loads the slide against said bottom 22 of the cavity space. The regulation device 26 is provided with two flow passages 32,33, which are defined by the middle part 29 of the slide and by the first end part 30, on one hand, and by the second end part 31, on the other hand. When the slide 29,30,31 is in the middle position shown in Fig. 4, both of the flow passages communicate through the annular groove 34 and the feed duct 19 with the central duct 20, through which the pressure medium is fed to the glide bearing elements 15,15a.

The regulation device 26 does, however, not distribute the pressure medium directly to the glide bearing elements 15,15a depending on the position of the slide 29,30,31 of the regulation device 26 but, in the embodiment of Fig. 4, the roll is additionally provided with a regulation valve 40. The regulation device 40 comprises a three-part slide 41,42,43 that moves in the bore 40a, the middle part 41 and the end parts 42 and 43 of the slide defining a first flow passage 44 and a second flow passage 45 between them. The regulation valve 40 is provided with a pressure-feed duct 46, which communicates with the same middle duct 20 through which pressure medium is fed to the regulation device 26. When the slide 41,42,43 of the regulation valve 40 is in the middle position shown in Fig. 4, pressure medium has access through the pressure-feed duct 46 in the regulation valve into the annular groove 51 that has been formed into the bore 40a and from said groove further to each flow passage 44,45. When the slide 41,42,43 is shifted away from the middle position shown in Fig. 4, e.g. to the left, the middle part 41 of the slide closes the connection of the pressure-feed duct 46 of the regulation valve with the second flow passage 45 and makes the connection more widely open with the first flow passage 44. The first flow passage 44 communicates through the first pressure duct 49 with the cavity space 21 of the first glide bearing element 15, and similarly the second flow passage 45 communicates through the second pressure duct 50 with the pressure duct 35a that has been formed into the frame piece 23a of the second glide bearing element 15a and from said duct 35a further with the cavity space 21a. The first flow passage 32 in the regulation device 26 communicates through the first pressure-control duct 47 with the bore 40a of the regulation valve 40 behind the first end part 42 of the slide, and similarly the second flow passage 33 of the regulation device 26 communicates through the second pressure-control duct 48 with the bore 40a of the regulation valve 40 behind the second end part 43 of the slide.

Also in the case of Fig. 4, the higher pressure is controlled through the regulation device 26 and the regulation valve 40 to the glide bearing element 15,15a at the side from whose direction an outside load is applied to the roll, in which case the glide bearing element placed at this side shifts the roll mantle 12 against the outside load. In practice this takes place so that, for example, when an outside load is applied to the roll from the left as is shown in Fig. 4, attempting to shift the roll mantle 12 to the right in Fig. 4, the slide 29,30,31 of the regulation device 26 is also shifted to the right, being shifted by the spring 28, in which case a connection is opened from the feed duct 19 to the second flow passage 33 and, at the same time, the connection with the first flow passage 32 is closed by the effect of the middle part 29 of the slide. In such a case, the pressure in the feed duct 19 has access through the second flow passage 33 and through the second pressure-control duct 48 so as to act behind the second end part 43 of the three-part slide in the regulation valve 40. The pressure shifts the slide 41,42,43 of the regulation valve 40 to the right in Fig. 4, in which case the middle part 41 of the slide closes the connection from the pressure-feed duct 46 of the regulation valve to the first flow passage 44 of the regulation valve and opens the connection from the pressure-feed duct 46 of the regulation valve to the second flow passage 45 of the regulation valve and from said passage further along the second pressure duct 50 and along the pressure duct 35a present in the frame piece 23a of the second bearing element 15a into the cavity space 21a in the second bearing element 15a. In such a case, in the cavity space 21a of the second glide bearing element 15a, a pressure is formed that is higher than the pressure that is present in the cavity space 21 in the first glide bearing element 15, in which case said higher pressure attempts to correct the position of the roll mantle 12 to the correct position. After the position of the roll mantle 12 has been corrected, the slides 29,30,31 and 41,42,43 both of the regulation device 26 and of the regulation valve 40 return to the middle positions shown in Fig. 4, whereby the situation has again become normal.

Thus, the operation of the embodiment as shown in Fig. 4 is to a great extent similar to that described in Fig. 3, however, with the difference that since, in the embodiment of Fig. 4, a pre-control is used by means of the regulation valve 40, in the embodiment of Fig. 4 no such transverse movement of oscillation of the roll mantle 12 can take place as may be possible in some cases in the embodiment of Fig. 3, in which no pre-control is used. Also, the construction of the regulation valve 40 is such that even a very little movement of the mantle 12 controls the flow and the pressure in the desired way. This has been accomplished in a way similar to that described in relation to Fig. 3A with respect to the regulation device 26, i.e. so that the dimensions of the middle part 41 of the slide in relation to the annular groove 51 and/or the shape of the middle part 41 of the slide has/have been chosen appropriately. Thus, even a very little movement of the slide 41,42,43 controls the flow and the pressure either into the first pressure duct 49 or into the second pressure duct 50.

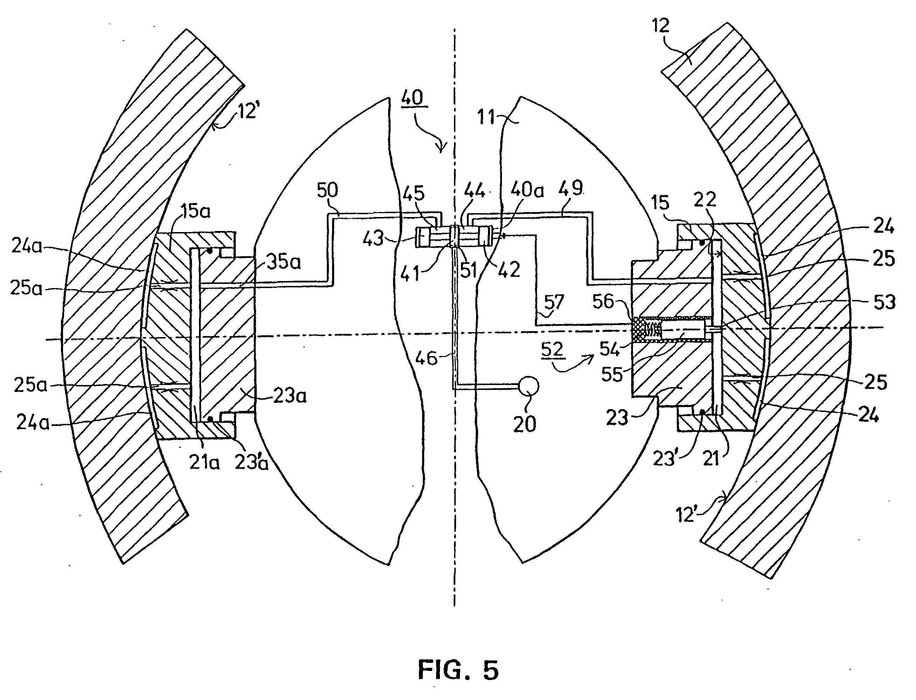

Fig. 5 shows a third embodiment of the lateral support of the roll mantle 12 in a roll provided with glide bearings. The solution in accordance with this embodiment differs from those described above in particular in the respect that the position and the movements of the roll mantle 12 are measured in a way different from the above embodiments. Also in the embodiment of Fig. 5, the roll is provided with glide bearing elements 15,15a acting in the direction transverse to the loading direction in opposite directions, which bearing elements are supported against the inner face 12' of the roll mantle. In this embodiment, as was also described above, the glide bearing elements 15,15a are provided with cavity spaces 21,21a, into which the frame piece 23,23a, which is attached to the roll axle 11, penetrates, said frame piece 23,23a being sealed in relation to said cavity space 21,21a by the intermediate of the seal 23',23'a. Further, the outer faces of the glide bearing elements 15,15a are provided with oil pockets 24,24a, which communicate with the pressurized cavity space 21,21a through capillary bores 25,25a formed through the glide bearing elements 15,15a. Thus, the fluid has access from the cavity space 21,21a through the capillary bores 25,25a into the oil pockets 24,24a to form a fluid film between the glide bearing elements 15,15a and the inner face 12' of the roll mantle.

In the embodiment of Fig. 5, in the frame piece 23 of the first glide bearing element 15, a position-measurement device 52 is fitted, which measures the position of the first glide bearing element 15 in relation to the frame piece 23 and, thus, the position of the roll mantle 12 in relation to the roll axle 11. The position-measurement device 52 comprises a frame 56 of the measurement device, in which a slide 55 is fitted, which is provided with a spindle 53 and which is loaded by means of a spring 54 so that the spindle 53 is supported against the bottom 22 of the cavity space in the first glide bearing element 15. The position-measurement device 52 operates electromagnetically or in some equivalent way. This figure specifically illustrates a solution that operates electromagnetically. The embodiment of Fig. 5 is provided with a regulation valve 40 of a type similar to that used in connection with the embodiment of Fig. 4. The pressure medium that is used for pressurization of the glide bearing elements 15,15a is, thus, passed from the central duct 20 through the pressure-feed duct 46 of the regulation valve into the regulation valve 40, which distributes the flow and the pressure in the desired and intended way to both of the glide bearing elements 15,15a. As a matter of fact, the regulation valve 40 differs from that shown in Fig. 4 exclusively in the respect that, whereas the position of the slide 41,42,43 of the regulation valve 40 was, in the embodiment of Fig. 4, controlled by means of pressure, in the embodiment of Fig. 5 the position of the slide 41,42,43 is controlled electromagnetically. In Fig. 5, this electromagnetic control is illustrated by means of the reference numeral 57, which means an electromagnetic control connection from the position-measurement device 52 to the regulation valve 40.

In the embodiment of Fig. 5, the control of the movements of the roll mantle 12 in the direction transverse to the loading direction takes place so that, for example, in Fig. 5, when an outside load is applied to the roll mantle from the right, the roll mantle 12 attempts to move to the left in Fig. 5, in which case the first glide bearing element 15 and, thus, by the effect of the spindle 53, also the slide 55 of the position-measurement device 52 move to the left in Fig. 5 against the force of the spring 54, thus, by the intermediate of the control connection 57, electromagnetically giving a control command to the slide 41,42,43 of the regulation valve 40 also to shift the slide to the left in Fig. 5. In such a case, the middle part 41 of the slide closes the connection from the pressure-feed duct 46 of the regulation valve through the second flow passage 45, through the second pressure duct 50, and through the pressure duct 35a placed in the frame piece 23a into the cavity space 21a of the second glide bearing element 15a and, in a corresponding way, opens the connection from the pressure-feed duct 46 of the regulation valve through the first flow passage 44 of the regulation valve 40 into the first pressure duct 49 and from it further into the cavity space 21 of the first glide bearing element 15. Thus, the flow into the cavity space 21 of the first glide bearing element 15 becomes larger, and the pressure in the cavity space 21 is also increased. Then, this higher pressure shifts the roll mantle 12 against the outside loading and corrects the position of the roll mantle 12 to the correct position from the position to which it had been shifted by the outside load. Once the position of the roll mantle 12 has been corrected, the slide 41,42,43 of the regulation valve 40 returns to the middle position shown in Fig. 5. The operation is, of course, similar if an outside load is applied to the roll from the opposite direction.

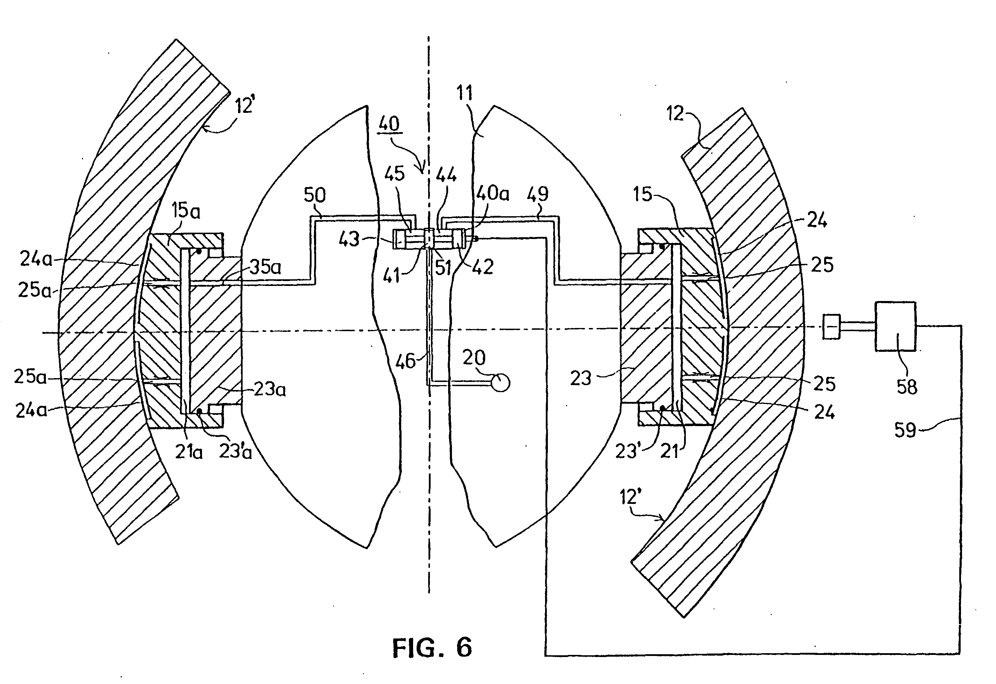

Fig. 6 shows a fourth embodiment of the lateral support of the roll mantle 12 in a roll provided with glide bearings. This embodiment is to a great extent similar to that shown in Fig. 5, so that in the solution of Fig. 6 the roll is provided with glide bearing elements 15,15a similar to those shown in the embodiment of Fig. 5 and, further, in the embodiment of Fig. 6 the roll is provided with a regulation valve 40 similar to that described in relation to Fig. 5. The embodiment of Fig. 6 differs from that shown in Fig. 5 in the respect that, whereas in the embodiment of Fig. 5 the device 52 for measurement of the position of the roll mantle was fitted inside the roll to measure the position of the roll mantle 12 by the intermediate of the first glide bearing element 15, in the solution of Fig. 6 the position-measurement device 58 is fitted outside the roll. From the position-measurement device 58 to the regulation valve 40, there is a fully similar, e.g., electromagnetic control connection 59 as was already described in relation to Fig. 5. In the embodiment of Fig. 6, the measurement device 58 may consist of a contact-free detector, as is shown in Fig. 6, or, differing from the illustration of Fig. 6, the detector may be such that the detector is provided with a follower member, which rests against the outer face of the roll 12 all the time. From the position-measurement device 58, information is transmitted constantly, electromagnetically or in an equivalent way, concerning the position of the roll mantle 12 along the electromagnetic or equivalent control connection 59 to the regulation valve 40, whose operation is identical with that illustrated in Fig. 5. Thus, in the embodiment of Fig. 6, the roll mantle 12 is kept in a fully corresponding way in its correct position, as was already described above.

Referring to the embodiments shown in Figs. 3 to 6, it should be stated that therein just one preferred alternative is described from among various ways in which the glide bearing elements 15,15a can be accomplished and constructed. Thus, the glide bearing elements 15,15a may differ even considerably from the construction shown in Figs. 3 to 6. Further, it should be stated that, even though, in Figs. 4 to 6, the regulation valve 40 has been accomplished as a construction inside the roll, the whole of the regulation valve 40 may also be fitted outside the roll, while the operation of the solution is, nevertheless, identical with that described above. The construction of the regulation valve 40 may also differ from the illustrations as long as it provides a similar operation.

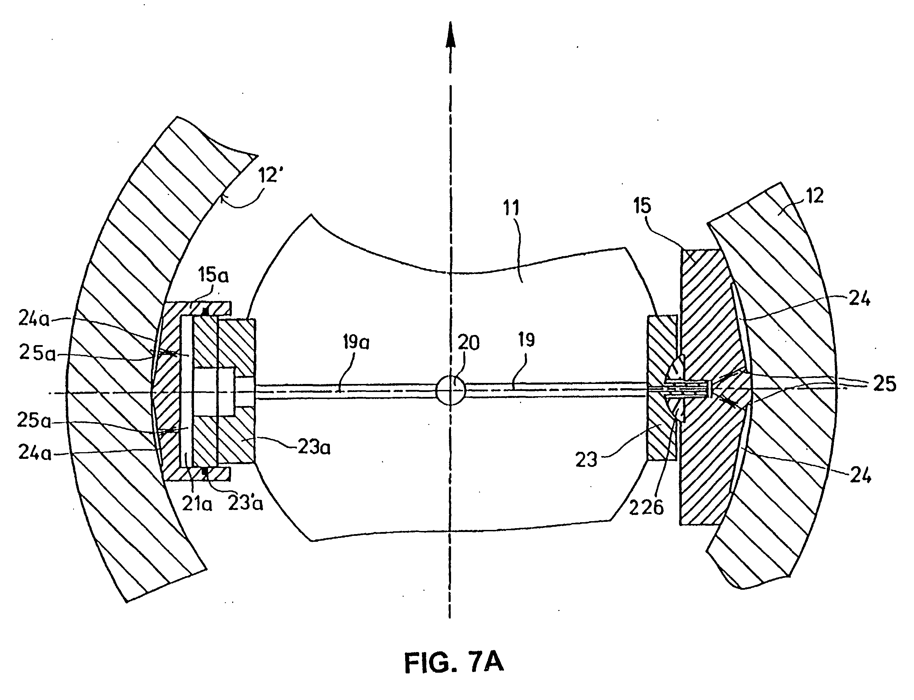

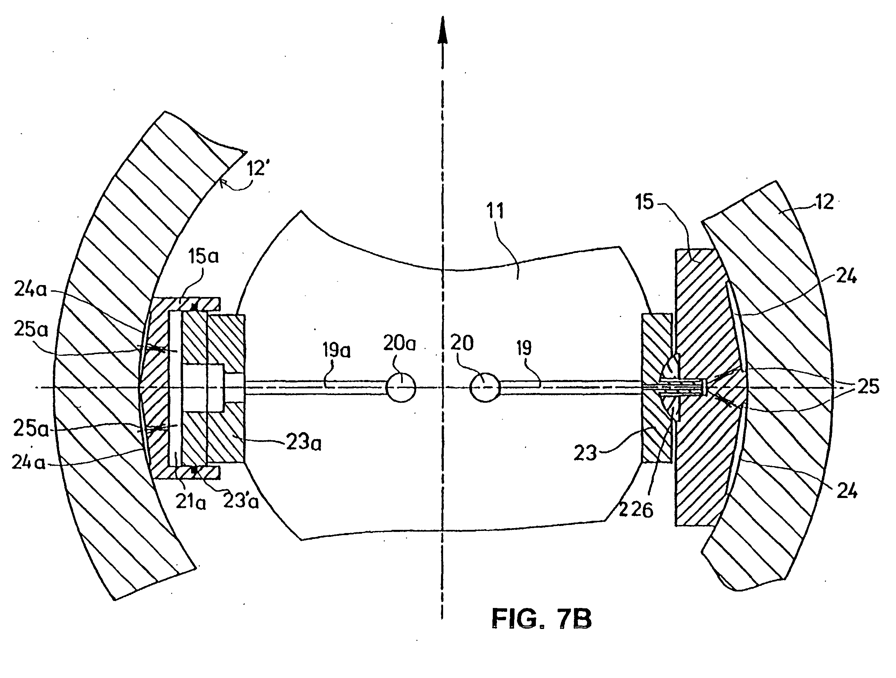

Figs. 7A and 7B are schematic sectional views of alternative embodiments in accordance with the invention of the support of the roll mantle 12 in the direction transverse to the loading direction. Figs. 7A and 7B are identical with one another with the exception that, in the case of Fig. 7A, the hydraulic pressure medium is passed to the glide bearing elements 15,15a acting in opposite directions from the same source of pressure through the same pressure duct 20, whereas, in the case of Fig. 7B, the pressure medium is passed to the glide bearing elements 15,15a acting in opposite directions from separate sources of pressure through separate pressure ducts 20,20A. As is the case in Figs. 1 and 2, so also in Figs. 7A and 7B, the roll mantle is denoted with the reference numeral 12 and the roll axle with the reference numeral 11. To begin with, the general construction of the solution used for lateral support of the roll mantle 12 will be described. As was already stated earlier, the roll mantle 12 is supported on the roll axle 11 by means of glide bearing elements 15,15a fitted in the direction transverse to the loading direction, which glide bearing elements act in opposite directions. As regards their operation, the glide bearing elements 15,15a are conventional, so that said glide bearing elements 15,15a are supported against the inner face 12' of the roll mantle by the intermediate of a fluid film.

In the illustrations in Figs. 7A and 7B, the first glide bearing element 15 is mounted on the roll axle 11 so that said first glide bearing element 15 cannot move in the radial direction in relation to the roll axle 11. The mounting of the first glide bearing element 15 on the roll axle 11 is, however, not fully fixed, but the glide bearing element 15 is allowed to be tilted in relation to the roll axle 11 in compliance with the position of the roll mantle 12. For this purpose, a frame piece 23 has been attached to the roll axle 11, in which frame piece the first glide bearing element 15 is mounted, for example, by means of a ball-shaped articulated bearing 226 as shown in Figs. 7A and 7B.

On the contrary, the second glide bearing element 15a, which acts in the opposite direction, is mounted as mobile in the radial direction in relation to the roll axle 11. For this purpose, in the embodiment shown in Figs. 7A and 7B, a frame piece 23a has been mounted on the roll axle 11, and the second glide bearing element 15a is provided with a cavity space 21a that can be pressurized by means of a hydraulic pressure medium, said frame piece 23a being fitted to penetrate into said cavity space 21a. The outer end of the frame piece 23a is shaped spherical, so that said spherical outer end, which is supported against the cylindrical inner wall of the cavity space 21 in the glide bearing element 15a by the intermediate of the seal 23'a, forms an articulation bearing, on which the glide bearing element 15a can turn. In the conventional way, into each of the glide bearing elements 15,15a, fluid pockets 24,24a have been formed, which communicate with the supply of the pressure medium through capillary bores 25,25a. The capillary bores 25 in the first glide bearing element 15 communicate with the feed duct 19 directly, whereas the capillary bores 25a in the second glide bearing element 15a communicate with the cavity space 21a which can be pressurized and into which the pressure medium is passed from the feed duct 19a.

As is shown in particular in Figs. 7A and 7B, the glide bearing elements 15,15a that act in opposite directions are of different sizes, so that the areas of effect of the glide bearing elements 15,15a, with which areas they are supported against the inner face 12' of the roll mantle are of different sizes. The first glide bearing element 15, which is stationary in the radial direction in relation to the roll axle 11, has a larger area than the glide bearing element 15a that acts in the opposite direction, and the ratio of the areas of said glide bearing elements 15,15a is preferably such that the area of the first glide bearing element 15 is twice as large as the area of the second glide bearing element 15a, which acts in the opposite direction. By means of this arrangement, it is achieved that the equipment that is intended for lateral support of the roll mantle 12 supports an equal amount of forces in both directions. This will be illustrated in the following for the sake of example.

A situation is examined in which an external transverse force is applied to the roll mantle 12, and, to illustrate the situation, the following denotations are used:

$A_1$ = area of the first glide bearing element 15
$p_1$ = pressure acting upon the first glide bearing element 15
$A_2$ = area of the second glide bearing element 15a
$p_2$ = pressure acting upon the second glide bearing element 15a
$F$ = external force that acts upon the roll in the transverse direction (from the right in Figs. 3A and 3B)

Then, according to the force balance condition:

$$p_2 A_2 + F = p_1 A_1$$

From the example given above, it can be seen directly that the pressure to be fed to the glide bearing elements 15,15a depends merely and exclusively on the magnitude of the force F applied to the roll from outside. A balance and a compensation for the external force F are obtained most favourably in a situation in which the ratio of the areas of the glide bearing elements 15,15a is 2. Then, irrespective of the magnitude of the force F applied to the roll from outside, the roll mantle is always in balance. True enough, the support forces produce an effect that tends to widen the roll mantle 12, which effect can, however, be partly considered even as an advantage, because in this way it is better possible to control the temperatures in the end areas of the roll mantle. This is because the glide bearing elements 15,15a that act in the transverse direction are, as is shown in Fig. 1, placed exactly in the end areas of the roll mantle.

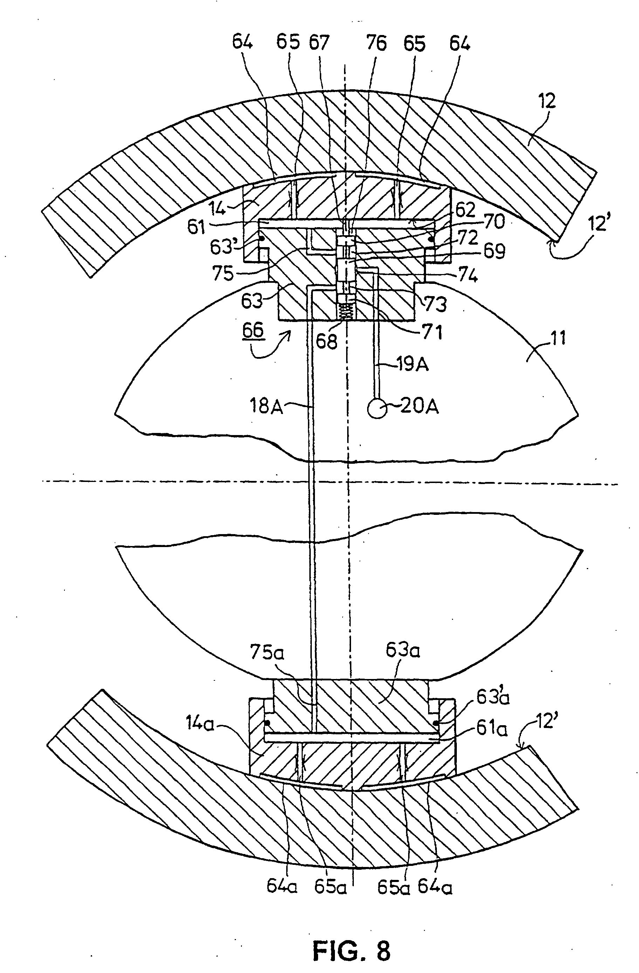

Fig. 8 is a schematic and partly sectional view of a first embodiment of the support and journalling of a roll fitted with glide bearings in the loading direction proper, i.e., in the case of a variable-crown roll 10 as shown in Fig. 1, in the direction of the nip plane. Also in Fig. 8, the roll axle is denoted with the reference numeral 11, and the roll mantle with the reference numeral 12. In the following, to begin with, the construction of the support arrangement as shown in Fig. 8 will be described, followed by a description of the operation of the support arrangement.

The roll mantle 12 is supported by means of glide bearing elements 14,14a loaded against the inner face 12' of the roll mantle, which bearing elements act, in the way shown in Fig. 8, in opposite directions, so that the first glide bearing element 14 loads the roll mantle 12 towards an outside load applied to the roll mantle, i. e., in the case shown in Fig. 1, towards the nip, and the second glide bearing element 14a loads the roll mantle in the opposite direction, respectively. In the construction shown in Fig. 8, the glide bearing elements 14,14a are provided with cavity spaces 61,61a that can be pressurized, and for each glide bearing element 14,14a, frame pieces 63,63a are mounted on the roll axle 11, which frame pieces penetrate into said cavity spaces 61,61a in the glide bearing elements, the frame pieces 63,63a being sealed in relation to said cavity spaces by means of seals 63',63'a so that the glide bearing elements 14,14a can move in relation to the frame pieces 63,63a. Regarding their construction, the glide bearing elements 14,14a are conventional, so that their outer faces are provided with oil pockets 64,64a, which communicate with the cavity spaces 61,61a through capillary bores 65,65a that pass through the glide bearing elements. Thus, from the pressurized cavity spaces 61,61a, through the capillary bores 65,65a, pressure medium, in particular oil, has access into the oil pockets 64,64a to form a fluid film between the glide bearing elements 14,14a and the inner face 12' of the roll mantle.

In the illustration in Fig. 8, the first glide bearing element 14 that acts in the loading direction is provided with a regulation device 66, which comprises a bore 76, which has been formed into the frame piece 63 of the glide bearing element and into which a three-part slide 69,70,71 has been fitted displaceably, said slide comprising a middle part 69, a first end part 70, and a second end part 71. The slide parts 69,70,71 are interconnected by a spindle 67, which keeps the slide parts apart from one another and which spindle 67 rests against the bottom 62 of the cavity space of the first glide bearing element 14. On the bottom of the bore 76, underneath the second end part 71 of the slide, a spring 68 is fitted, which loads said spindle 67 against the bottom 62 of the cavity space. Thus, the regulation device 66 consists of a valve into which a pressure medium is fed through the middle duct 20A and the feed duct 19A and which valve distributes the pressure and the flow of the pressure medium that has been fed in the desired pre-determined proportion through the flow passages 72 and 73 defined by the slide parts 69,70,71 of the regulation device 66 and through the connecting duct 18A and through the pressure ducts 75,75a formed into the frame pieces 63,63a of the glide bearing elements 14,14a into the cavity spaces 61,61a in the glide bearing elements 14,14a. Further, an annular groove 74 has been formed into the bore 76 at the connection point between the feed duct 19A and the bore 76.

As is obvious, in a roll in accordance with the invention, the roll mantle 12 can move radially in relation to the roll axle 11 also in the direction of loading. In the case illustrated in Fig. 8, the roll mantle 12 is shown in the middle position, and from this middle position the roll mantle 12 is allowed to move a certain distance in both directions. For example, when a variable-crown roll 10 as shown in Fig. 1 is concerned, which forms a nip with a back-up roll, a suitable permitted movement of the roll mantle 12 is, e.g., 25 mm in both directions. This measure is, of course, just given as an example. By means of the regulation device 66, the movements of the roll mantle 12 are controlled in the direction of loading concerned, and the movement is restricted to the desired maximum value. As can be seen from Fig. 8, the axial length of the middle part 69 of the slide of the regulation device 66 is larger than the axial length of the annular groove 74 that has been formed into the bore 76, and expressly this dimensioning has a decisive significance for the control of the movements of the roll mantle 12.

In the situation shown in Fig. 8, in which the roll mantle 12 is in the middle position, the middle part 69 of the slide covers the annular groove 74 completely. When the roll mantle 12 starts moving from the position shown in Fig. 8 in either direction, e.g. down in Fig. 8, the first glide bearing element 14, which is loaded against the inner face 12' of the roll mantle by the intermediate of a fluid film, follows the movement of the roll mantle 12 and presses the slide of the regulation device 66 by the intermediate of the spindle 67 in the same direction against the load of the spring 68. The axial length of the middle part 69 of the slide has been dimensioned so that, when the roll mantle 12 approaches its permitted extreme position, the slide 69,70,71 has moved into such a position that pressure medium can flow from the feed duct 19A through the annular groove 74 beyond the middle part 69 of the slide into the first flow passage 72 and from it further along the pressure duct 75 into the cavity space 61. This forms a braking pressure for the movement of the roll mantle 12, which braking pressure finally stops the roll mantle 12 in its permitted extreme position. Then, the pressure ducts of the setting pressure proper, which pass to the glide bearing elements 14,14a, are preferably closed. It is an advantage of the arrangement that it permits controlled movements of the roll mantle 12 without outside control, and, moreover, it also protects the fluid films of the glide bearing elements 14,14a in the extreme positions of the roll mantle 12. The operation of the arrangement is, of course, similar when the movement of the roll mantle 12 takes place in the opposite direction.

The illustration in Fig. 8 is deficient in the respect that, in said figure, it is just shown in what ways the movements of the roll mantle 12 are controlled and braked down. It is, however, fully obvious that, besides the pressure connections shown in Fig. 8, a normal setting pressure must be fed into the cavity space 61,61a in each glide bearing element 14,14a also in the middle position shown in Fig. 8, by means of which setting pressure the glide bearing elements 14,14a are also loaded against the inner face 12' of the roll mantle in the situation shown in the figure. As can be seen from Fig. 8, the supply of the setting pressure cannot be arranged through the feed duct 19A, because the middle part 69 of the slide covers the annular groove 74 completely and prevents flow of the pressure medium into both of the flow passages 72,73. For the feed of the setting pressures, into each frame piece 63,63a, simply an additional duct that communicates with a pressure source must be formed, the pressure medium that is passed through said additional duct being not passed through the regulation device 66.

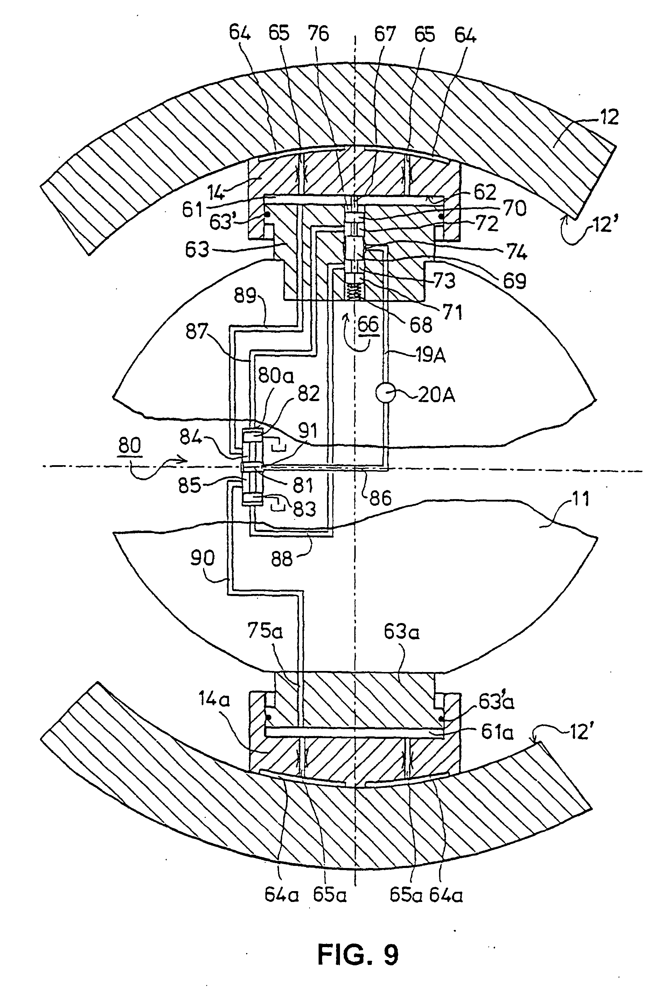

Fig. 9 is an illustration corresponding to Fig. 8 of a second embodiment of the control of the movements of the roll mantle 12 in a roll fitted with glide bearings. The embodiment of Fig. 9 differs from that shown in Fig. 8 in the respect that the arrangement as shown in Fig. 9 is provided with pre-control. To begin with, a brief description will be given of the construction of the arrangement shown in Fig. 9. In said figure, the roll axle is denoted with the reference numeral 11 and the roll mantle with the reference numeral 12. In the direction of loading, the roll mantle 12 is supported by means of glide bearing elements 14,14a acting upon the inner face 12' of the roll mantle, which bearing elements act in opposite directions. Similarly to the embodiment of Fig. 8, the glide bearing elements 14,14a are provided with frame pieces 63,63a mounted on the roll axle 11, which frame pieces penetrate into the cavity spaces 61,61a that have been formed into the glide bearing elements 14,14a. The sealing is arranged by means of seals 63',63'a in a way similar to that described in relation to Fig. 8. Onto the glide bearing elements 14,14a, into their outer faces, oil pockets 64,64a have been formed, which oil pockets communicate through the capillary bores 65,65a with the cavity spaces 61,61a so that, through said capillary bores 65,65a, the pressure medium has access from the cavity spaces 61,61a into the oil pockets 64,64a to form a fluid film between the inner face 12' of the roll mantle and the glide bearing elements 14,14a.

Further, in a way similar to Fig. 8, in the embodiment of Fig. 9 the arrangement is provided with a regulation device 66, which comprises a bore 76 which has been formed into the frame piece 63 of the first glide bearing element 14 and into which a three-part slide 69,70,71 has been fitted displaceably, which slide is loaded by means of a spring 68 fitted on the bottom of the bore 76 underneath the slide towards the first glide bearing element 14 so that the spindle 67 of the slide is supported against the bottom 62 of the cavity space. Further, similarly to Fig. 8, an annular groove 74 has been formed into the bore 76, which annular groove 74 communicates with the central duct 20a through the feed duct 19A, from which central duct 20a the pressure medium is fed to the regulation device 66.

Differing from Fig. 8, the embodiment of Fig. 9 is additionally provided with a regulation valve 80, which forms a pre-control for the regulation of the movement of the roll mantle 12. In principle, the construction of the regulation valve 80 is similar, e.g., to the regulation valve 40 shown in Fig. 4, so that the regulation valve 80 comprises a three-part slide 81,82,83 moving in a bore 80a, in which slide flow passages 84,85 remain between the slide parts for the pressure control. The bore 80a in the regulation valve 80 is provided with an annular groove 91, from which the regulation valve 80 communicates through the pressure-feed duct 86 with the central duct 20A. The first flow passage 72 of the regulation device 66 communicates through the pressure-control duct 87 with the bore 80a behind the first end part 82 of the three-part slide, and similarly the second flow passage 73 of the regulation device 66 communicates through the second pressure-control duct 88 with the bore 80a of the regulation valve behind the second end part 83 of the slide. On the other hand, from the first flow passage 84 of the regulation device 80, the first pressure duct 89 passes to the cavity space 61 of the first glide bearing element 14, and similarly the second flow passage 85 of the regulation device communicates through the second pressure duct 90 with the pressure duct 75a formed into the frame piece 63a of the second glide bearing element and from said duct 75a further with the cavity space 61a. As is the case in the embodiment shown in Fig. 8, so also in the exemplifying embodiment of Fig.

9, the arrangements related to the feeds of setting pressures proper for the glide bearing elements 14,14a are not shown.

The operation of the embodiment as shown in Fig. 9 is as follows. In Fig. 9, the roll mantle 12 is shown in its middle position and, when the roll mantle 12 moves away from the middle position shown in either direction, for example down in Fig. 9, the regulation device 66 permits a shift of a certain extent of the roll mantle 12, out of a reason similar to that described in relation to Fig. 8, i.e. the distance determined by the axial length of the middle part 69 of the slide of the regulation device 66.

When the roll mantle 12 approaches its extreme position, a connection is opened from the feed duct 19A into the first flow passage 72 and from it further, a pressure connection is opened along the first pressure-control duct 87 into the bore 80a behind the first end part 82 of the slide of the regulation valve 80. Then, the pressure coming from the first pressure-control duct 87 shifts the slide of the regulation valve 80 down in Fig. 9, so that the middle part 81 of the slide fully closes the connection from the pressure-feed duct 86 of the regulation valve into the second flow passage 85 of the regulation valve 80, and correspondingly opens the connection into the first flow passage 84, from which passage the flow and the pressure coming from the central duct 20A through the pressure-feed duct 86 of the regulation valve have access through the first pressure duct 89 into the cavity space 61 in the first glide bearing element. In such a case, the pressure passed into said cavity space 61 in the first glide bearing element forms a braking pressure for the movement of the roll mantle 12, which pressure ultimately stops the movement of the roll mantle 12 in its extreme position. Thus, the operation of the embodiment shown in Fig. 9 is similar to that shown in Fig. 8, with the exception that, owing to the regulation valve 80, an attenuation is provided for the control of the movement of the roll mantle 12, in which case sudden vibrations and oscillations, which may occur in the embodiment of Fig. 8, are eliminated in the embodiment of Fig. 9.

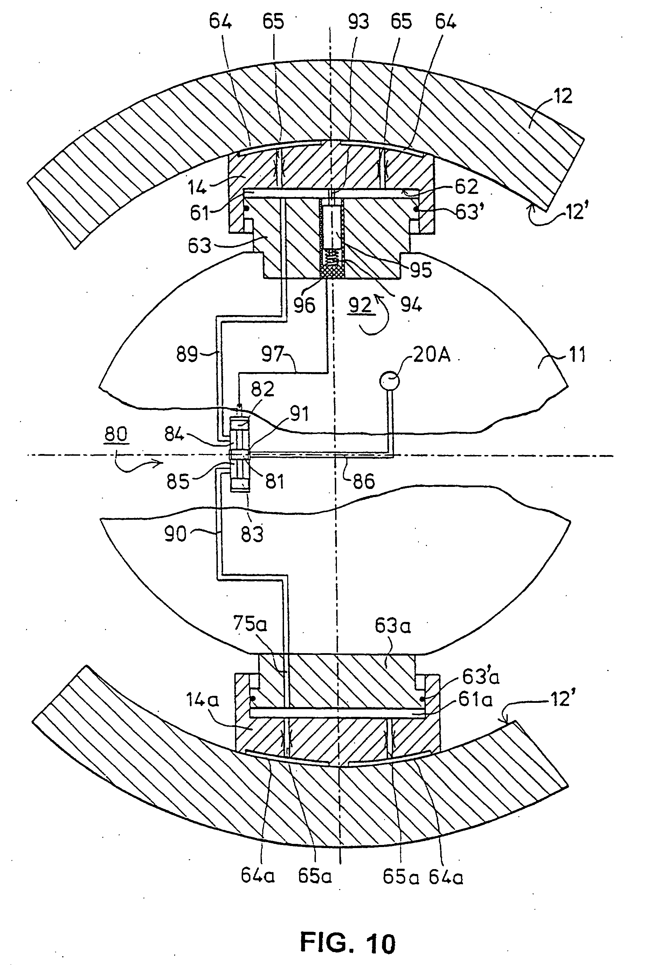

Fig. 10 shows a third embodiment of the control of the movements of the roll mantle 12 in the loading direction, i.e., for example, in the case of the variable-crown roll 10 shown in Fig. 1, in the direction of the nip plane. Also in the embodiment shown in Fig. 10, the roll axle is denoted with the reference numeral 11 and the roll mantle with the reference numeral 12. In the way similar to the embodiments of Figs. 8 and 9, the roll mantle 12 is supported in relation to the axle 11 by means of glide bearing elements 14,14a acting in the direction of loading in opposite directions, which bearing elements are provided with cavity spaces 61,61a and with frame pieces 63,63a penetrating into said cavity spaces and attached to the roll axle 11. The sealing between the frame pieces 63,63a and the cavity spaces 61,61a is arranged by means of the seals 63',63'a in the way described above. Further, in the way described above, the glide bearing elements 14,14a are provided with oil pockets 64,64a on their outer faces, which oil pockets communicate through the capillary bores 65,65a with the cavity spaces 61,61a so that pressure medium has access from the cavity spaces 61,61a through the capillary bores 65,65a into the oil pockets 64,64a to form a fluid film between the glide bearing elements 14,14a and the inner face 12' of the roll mantle.

The embodiment of Fig. 10 differs from the embodiments shown in Figs. 8 and 9 so that the arrangement is provided with a position-measurement device 92 placed inside the roll, which device 92 is, in the case of Fig. 10, arranged in connection with the first glide bearing element 14. In the exemplifying embodiment described, the position-measurement device 92 is an electromagnetically operating position-measurement device, which comprises a frame 96 of the measurement device, which has been fitted into the frame piece 63 of the glide bearing element 14 and into which a slide 95 provided with a spindle 93 has been arranged displaceably, the slide 95 being loaded by means of a spring 94 so that the spindle 93 rests against the bottom 62 of the cavity space. Further, the arrangement in accordance with Fig. 10 is provided with a regulation valve 80 similar to that shown in Fig. 9, the movement of the slide 81,82,83 of said regulation valve receiving its control electromagnetically from the position-measurement device 92 by the intermediate of the electromagnetic control connection 97. The regulation valve 80 communicates through the pressure ducts 89 and 90 with the cavity space 61,61a of each glide bearing element 14,14a. The principle of operation may also be other than electromagnetic.

The operation of the embodiment as shown in Fig. 10 is as follows. Firstly, certain limit values have been set for the slide 95 of the position-measurement device 92, so that, when the roll mantle 12 moves far enough so that the slide 95 reaches its preset limit value, which corresponds to the pre-determined extreme position of the roll mantle 12, the position-measurement device 92 gives, through the control connection 97, a command to shift the slide 81,82,83 of the regulation valve 80. If the roll mantle 12 moves down in the illustration of Fig. 10 so that the movement of the slide 95 reaches its preset limit value, the position-measurement device 92 gives a command to shift the slide 81,82,83 of the regulation valve 80 down in Fig. 10, in which case the pressure and the flow have access from the central duct 20A through the pressure-feed duct 86 of the regulation valve into the first flow passage 84 of the regulation valve 80 and from it further along the first pressure duct 89 into the cavity space 61 of the first glide bearing element 14 so as to produce a braking pressure for the movement of the roll mantle 12. In the other respects, the operation is similar to that described above in relation to Figs. 8 and 9.

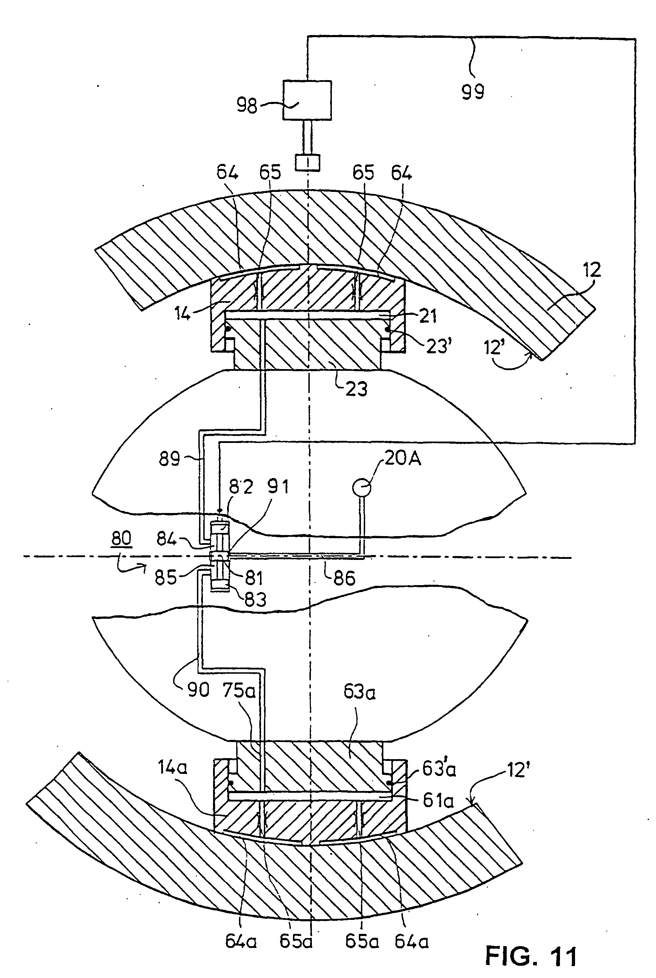

Fig. 11 shows a fourth exemplifying embodiment of the arrangement in accordance with the invention for the control of the position and the movements of the roll mantle 12 in the direction of loading, i.e., in the roll 10 as shown in Fig. 1, in the direction of the nip plane, when a roll provided with glide bearings is concerned. The embodiment shown in Fig. 11 is in the other respects similar to, and identical with, the embodiment shown in Fig. 10, however, with the exception that, whereas the position-measurement device 92 was, in the embodiment of Fig. 10, fitted inside the roll, in Fig. 11 a solution is shown in which the position-measurement device 98 is placed outside the roll. As regards its mode of operation, the position-measurement device 98 can be similar to that shown in Fig. 10, i.e., for example, such that the position-measurement device 98 measures the position of the roll mantle 12 either by means of a contact-free detector or by means of a detector that is in contact with the roll mantle 12 and, depending on the position of the roll mantle 12, gives an electromagnetic or other control signal along the control connection 99 to the regulation valve 80 so as to produce a braking pressure in the glide bearing element 14,14a placed at the side of the loading. Since, also in the embodiment of Fig. 11, it is essential that a maximum movement of a certain magnitude must be allowed for the roll mantle 12 in both directions from the middle position shown in Fig. 11, the position-measurement device 98 is fitted to give a control signal that transfers the slide 81,82,83 of the regulation valve when the roll mantle 12 approaches its extreme position. Thus, the principle of operation is equal to that in the embodiment shown in Fig. 10.

In the embodiments shown in Figs. 9, 10 and 11, it was described that the regulation valve 80 is fitted inside the roll. The regulation valve 80 may, of course, also be fitted outside the roll, the operation of the arrangement being, nevertheless, similar to that described above. Further, it is a feature common of the embodiments of Figs. 9, 10 and 11, and so also of Fig. 8, that, as was stated above, in these figures it is not illustrated how the setting pressures proper are passed to the glide bearing elements. In the embodiments of Figs. 8, 9, 10 and 11, the emphasis has been exclusively on the way in which the movements of the roll mantle 12 are controlled and in which the braking pressures are produced in the glide bearing elements 14,14a. The introduction of the setting pressures to the glide bearing elements 14,14a can be solved by fully conventional means.

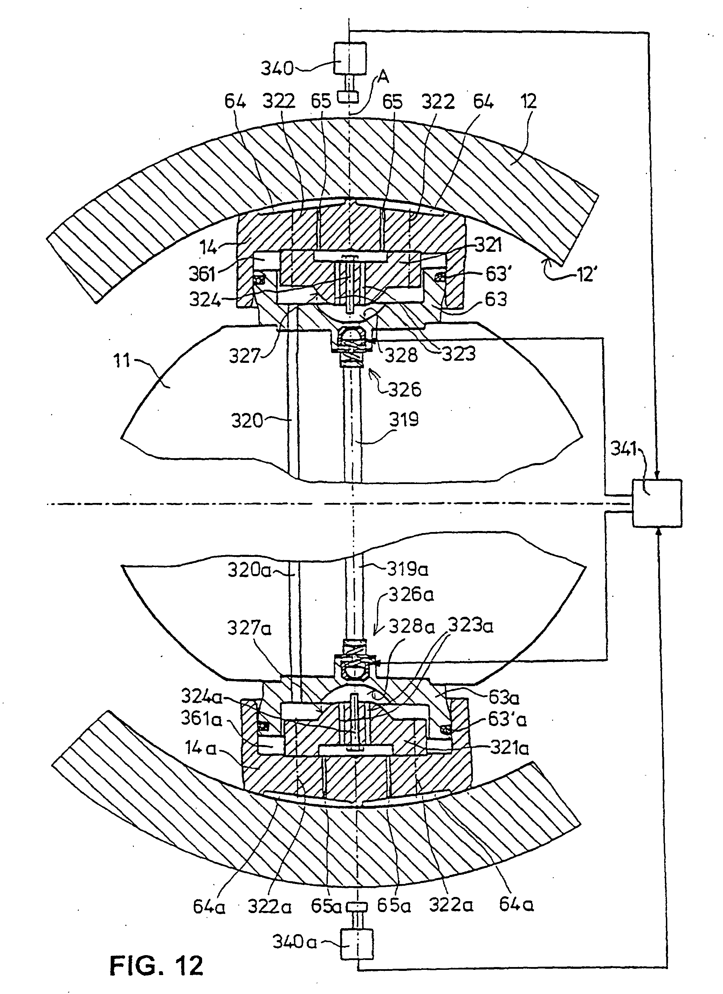

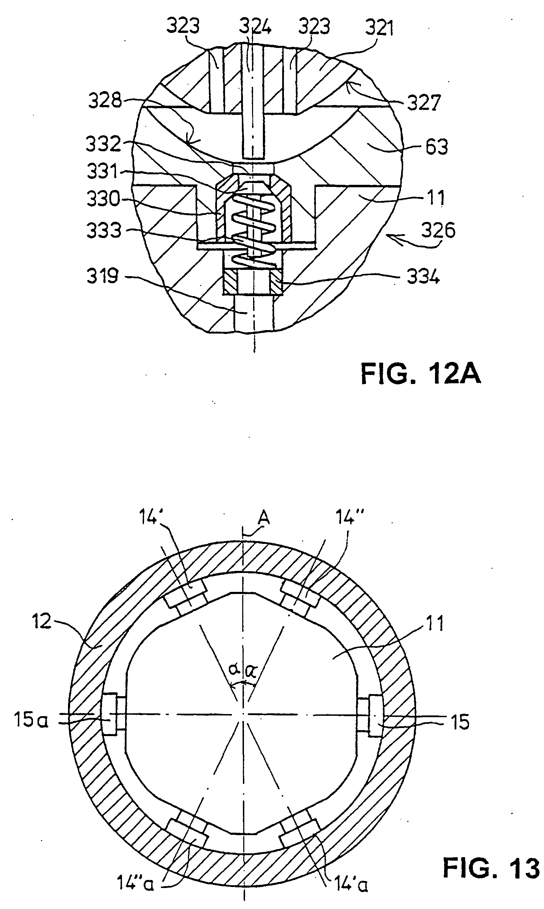

Fig. 12 is a schematic and partly sectional view of an alternative embodiment of the support of the roll mantle in the so-called principal loading direction, i.e., in the case of a variable-crown roll 10 as shown in Fig. 1, in the direction of the nip plane. In Fig. 12, the nip plane is denoted with the reference A. Also in this Fig. 12, the roll axle is denoted with the reference numeral 11, and the roll mantle with the reference numeral 12. In the following, to begin with, the construction of the support arrangement as shown in Fig. 12 will be described, followed by a description of the operation of the support arrangement.

The roll mantle 12 is supported by means of glide bearing elements 14,14a loaded against the inner face 12' of the roll mantle, which bearing elements act, in the way shown in Fig. 12, in opposite directions, so that the first glide bearing element 14 loads the roll mantle 12 towards an outside load applied to the roll mantle, i.e., in the case shown in Fig. 1, towards the nip, and the second glide bearing element 14a loads the roll mantle in the opposite direction, respectively. In the case as shown in Fig. 12, the glide bearing elements 14,14a are, thus, arranged in the nip plane A to act in opposite directions. The glide bearing elements 14,14a are provided with cavity spaces 361,361a that can be pressurized, and for each glide bearing element 14,14a, frame pieces 63,63a are mounted on the roll axle 11, which frame pieces penetrate into said cavity spaces 361,361a in the glide bearing elements, the frame pieces 63,63a being sealed in relation to said cavity spaces by means of seals 63',63'a so that the glide bearing elements 14,14a can move in relation to the frame pieces 63,63a.

Regarding their construction, the glide bearing elements 14,14a are conventional, so that their outer faces are provided with oil pockets 64,64a, which communicate with the cavity spaces 361,361a through capillary bores 65,65a that pass through the glide bearing elements. To the bottoms of the cavity spaces 361,361a in the glide bearing elements 14,14a, bottom pieces 321,321a have been fixed by means of purposeful fastening means 322,322a, for example screw members. Into the bottom pieces 321,321a, bores 323,323a have been formed, which connect the cavity spaces 361, 361a with the capillary bores 65,65a and from them further with the oil pockets 64, 64a. Thus, from the pressurized cavity spaces 361,361a, through the bores 323,323a and the capillary bores 65,65a, pressure medium has access into the oil pockets 64,64a to form a fluid film between the glide bearing elements 14,14a and the inner face 12' of the roll mantle.

The pressure medium that is used for loading the glide bearing elements 14,14a is introduced into the glide bearing elements through pressure ducts 320,320a. Thus, the feed of the setting pressure is arranged through said pressure ducts 320,320a, and, by means of this setting pressure, loads of the desired magnitude are applied to the glide bearing elements 14,14a. Into each glide bearing element 14,14a, a second duct also passes, i.e. the braking-pressure feed duct 319,319a. Through said braking-pressure feed duct 319,319a, the braking pressure is passed to the glide bearing elements 14,14a, by means of which pressure the movement of the glide bearing element 14,14a concerned and, thus, of the roll mantle 12 is braked down when the roll mantle 12 approaches its extreme position, and finally the roll mantle 12 is stopped in its said permitted extreme position by means of said braking pressure. The braking-pressure feed duct 319,319a is not opened directly into the cavity space 361,361a in the glide bearing element 14,14a, but the access of the braking pressure into the cavity space 361,361a is regulated by means of a regulation device 326,326a fitted in the frame piece 63,63a of the glide bearing element. Through said regulation device 326,326a, the braking pressure can act in the desired way between the concave spherical face 328 that has been formed into the frame piece 63,63a and the convex spherical face 327,327a provided on the bottom piece 321,321a of the glide bearing element 14,14a. It is shown further in Fig. 12 that a pin 324,324a is provided on the frame piece 321,321a, which pin acts upon the regulation device 326,326a when the roll mantle 12 is close to its extreme position. The construction of the regulation device 326,326a and so also the mechanical positive control of the operation of the support arrangement are described in more detail in relation to Fig. 12A, which is a more detailed illustration of said regulation device.

As is shown in Fig. 12A, the regulation device 326 consists of a simple back valve, which comprises a valve body 330, in whose interior a closing piece 331 is fitted, which is loaded by a spring 333 and which, in the situation shown in Fig. 12A, covers and closes the valve opening 332. In the embodiment of Fig. 12A, a support piece 334 is mounted on the orifice of the feed duct 319 of the braking pressure, against which piece 334 the spring 333 rests. In the other respects, the denotations in Fig. 12A correspond to those described in Fig. 12 so that the reference numeral 11 denotes the roll axle, the reference numeral 63 the frame piece of the glide bearing element, and the reference numeral 328 the concave spherical face formed into the frame piece 63. Similarly, the reference numeral 321 denotes the bottom piece of the glide bearing element, the reference numeral 327 the convex spherical face formed on the bottom piece, the reference numerals 323 the bores passing through the bottom piece 321, and the reference numeral 324 the pin installed in the bottom piece. As was described earlier in relation to Fig. 12, the setting pressure proper is fed into the glide bearing element through the pressure duct 320, which is not shown in Fig. 12A. In the braking-pressure feed duct 319, there is constantly a braking pressure of a certain magnitude, also in the situation shown in Fig. 12A, in which the regulation device 326, i.e. the back valve, is closed.

When the roll mantle 12 approaches its extreme position in the direction of loading of the glide bearing element, i.e., in the case of Fig. 12A, when the roll mantle 12 moves down, the glide bearing element 14 proper and the frame piece 63 approach one another, whereby the space between the spherical faces 327,328 shown in Fig. 12A also becomes smaller. When the movement approaches its extreme position, the pin 324 penetrates into the opening 332 of the back valve and shifts the closing piece 331 away from the opening 332 and opens the flow passage from the feed duct 319 into the space between the spherical faces 327 and 328.

When the roll mantle 12 and, thus, the glide bearing element 14 are fully in their extreme positions, it is possible in an extreme case that the spherical faces 327,328 are in contact with one another, but, in spite of this, pressure medium has access from the braking-pressure feed duct 319 into the bores 323 and from there further through the capillary bores 65 into the fluid pockets 64. Thus, the fluid film is retained between the glide bearing element 14 and the inner face 12' of the roll mantle also in extreme situations even if the pressure present in the pressure duct 320 for the setting pressure were zero. The spherical faces 327,328 corresponding to one another and the bores 323 are formed so that, even if said spherical faces 327,328 were in contact with one another, the bores 323 are not closed, but through them there is a constant connection into the oil pockets 64. When the roll mantle 12 has returned to its "normal position", which is illustrated in Figs. 12 and 12A, the back valve, which forms the regulation device 326, has been closed again, whereby the pressure in the feed duct 319 cannot pass beyond the closing piece 331 of the back valve. Since the distances of movement of the roll mantle 12 are very limited, i.e., from the middle position shown in Fig. 12, for example, of an order of 10...25 mm in each direction, the opening of the back valve 326 must take place rapidly in order that the braking pressure could act upon the space between the frame piece 63 and the bottom piece 321 of the glide bearing element 14 early enough. This is why the regulation device 326 need not restrict or regulate the flow of the braking pressure in any other way, but a mere open/closed operation is sufficient for the regulation device 326. This is why it is preferable to use a conventional back valve as the regulation device. A construction fully similar to that described above is also used in the other glide bearing element 14a.

In Fig. 12, additionally, a mode of control is described which is alternative to the regulation device 326 as shown in Fig. 12A, i.e. to the open/closed operation of the back valve. According to Fig. 12A, the opening of the back valve 326 was arranged mechanically under positive control, but, according to the alternative mode of Fig. 12, the back valve 326 is controlled electrically from outside. According to Fig. 12, the electrical control is accomplished so that, in the principal loading direction of the roll, i.e. in the direction of the nip plane A, at both sides of the roll mantle 12, limit detectors 340,340a are installed, which are, for example, inductive connectors. Said limit detectors 340,340a are electrically connected with a control device 341, from which there is a further electrical connection to each regulation device 326,326a. Said regulation devices, i.e. back valves 326,326a, are then, of course, provided with electrical control members (not shown). The limit detectors 340,340a do not measure the movement of the roll mantle 12 constantly, but said limit detectors 340, 340a are so-called ON/OFF connectors, which are activated when the movement of the roll mantle 12 reaches a certain preset limit position in the direction of its movement. When this takes place, the limit switch 340/340a gives an impulse to the control device 341, which again transmits an electrical control command directly to the regulation device 326/326a at the side from which the movement of the roll mantle 12 approaches its preset extreme position, so as to open said back valve 326/326a and to pass the braking pressure into the respective glide bearing element 14/14a. Thus, by means of said electrical control, the same final result is obtained as with the mechanical positive control described earlier.

Fig. 13 illustrates a solution alternative to the embodiment shown in Fig. 2. As was already stated in connection with the description related to Fig. 2, the invention can also be carried out so that a number of glide bearing elements are used that are fitted to act radially in different angular positions. Thus, Fig. 13 illustrates a case in which the transverse support of the roll mantle 12 is arranged in a way similar to that described in relation to Fig. 2, i.e. by means of glide bearing elements 15,15a acting in opposite directions. In stead, the support of the roll mantle 12 in the principal loading direction, i.e. in the direction of the nip plane A, has been accomplished so that, in the suggested solution, glide bearing elements 14',14";14'a,14"a are used which do not act directly in the principal loading direction, but diverge from this direction by the angle a in opposite directions. The solution as shown in Fig. 13 is advantageous in particular in the respect that, by means of the solution, a force is achieved that is higher than in the construction as shown in Fig. 2, because the resultant of the forces of the glide bearing elements 14',14" and 14'a,14"a, respectively, acts in the principal loading direction. In all the other respects, the embodiment of Fig. 13 is similar to that described above, so that, in each of the glide bearing elements acting in the principal loading direction, the regulation device described above is used.

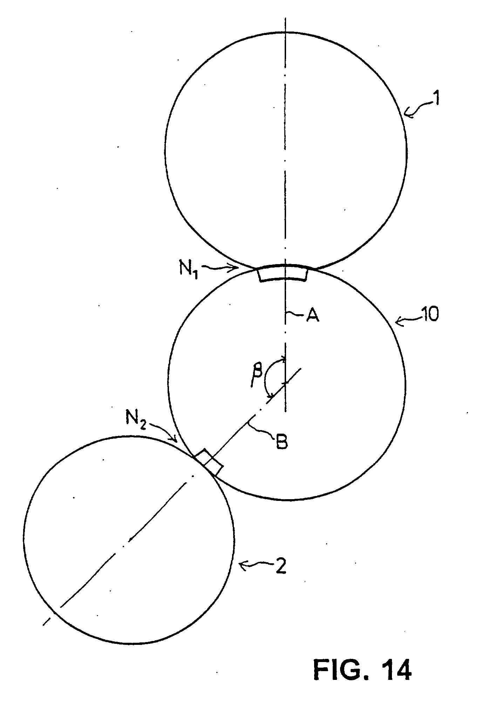

Fig. 14 is a further fully schematic illustration of a possible position in which a roll in accordance with the invention can be applied. In the situation illustrated in Fig. 14, the roll 10 is loaded in the directions of two planes, so that the roll 10 in accordance with the invention forms nips with two back-up rolls 1,2. Thus, in the case of Fig. 14, the roll 10 has two nip planes A and B, which form an angle $\beta$ with one another. Further, it is shown in Fig. 14 that the first back-up roll 1 is a so-called extended-nip roll, which forms an extended nip $N_1$ with the roll 10 in accordance with the present invention. In the case of Fig. 14, the other back-up roll 2 is an ordinary back-up roll which forms a nip $N_2$. Arrangements of other sorts are also possible in respect of the roll in accordance with the invention.

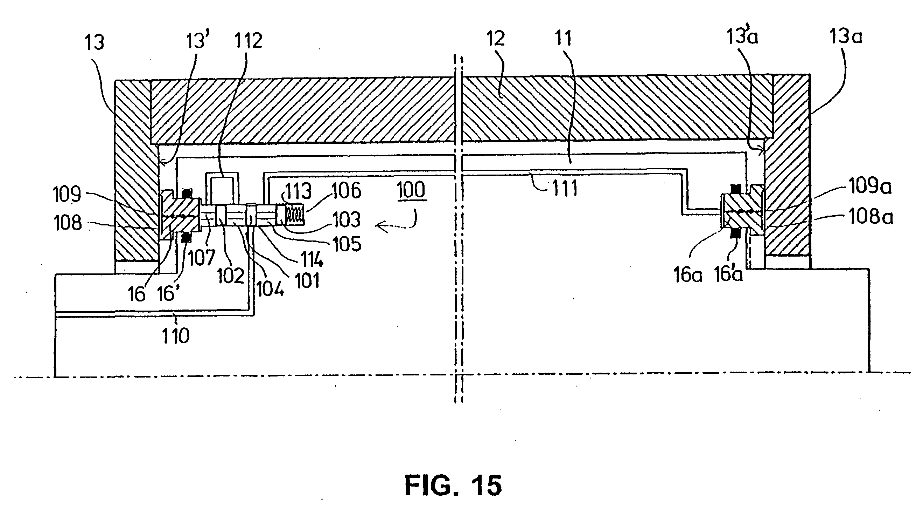

Fig. 15 shows a first embodiment of the axial support of the roll mantle 12 in a roll provided with glide bearings. The mode of axial support is to a great extent similar to the arrangement of support of the roll mantle 12 in the lateral direction, so that, for example, the support arrangement illustrated in Fig. 3 could be applied to the axial support of the roll mantle almost as such. In Fig. 15, the roll axle is denoted with the reference numeral 11 and the roll mantle with the reference numeral 12. The roll mantle 12 is provided with roll ends 13,13a, and in the interior of the roll mantle, axial glide bearing elements 16,16a are fitted, which are supported on the roll axle 11, which act in opposite directions, and which are supported against the inner faces 13',13'a of the roll ends. The construction of the glide bearing elements 16,16a is simpler than that shown in Fig. 3, so that, in the embodiment of Fig. 15, bores have simply been formed into the roll axle 11, into which bores the piston parts of the glide bearing elements 16,16a have been fitted displaceably. Of course, the bores that have been formed into the axle 11 for the glide bearing elements 16,16a are provided with necessary seals 16',16'a.

The first axial glide bearing element 16 is connected with a regulation device, which is denoted generally with the reference numeral 100. The regulation device 100 comprises a slide 101,102,103 that has been fitted into the bore 113 formed into the roll axle 11, in which slide the middle part 101 and the end parts 102 and 103 of the slide define flow passages 104,105 between them for the flow of a pressure medium. The three-part slide 101,102,103 of the regulation device is provided with a spindle 107, and on the bottom of the bore 113, underneath the slide 101,102,103, a spring 106 is fitted, which loads the spindle against the piston part of the first axial glide. bearing element 16. The glide bearing elements 16,16a are, of course, provided with oil pockets 108,108a, and capillary bores 109,109a have been formed through the glide bearing elements, which bores connect the oil pockets 108,108a with the pressure medium that has been fed to below the glide bearing elements, so that pressure medium has access through the capillary bores 109,109a into the oil pockets 108,108a to form a necessary fluid film between the inner faces 13',13'a of the roll ends and the glide bearing elements 16,16a.

The regulation device 100 communicates with the pressure-medium feed duct 110, which is opened into the annular groove 114 that has been formed into the bore 113 in the regulation device. The axial length of the annular groove 114 and the axial length of the middle part 101 of the three-part slide of the regulation device have been fitted in such a way in relation to one another that in the middle position shown in Fig. 15 the glide bearing elements 16,16a receive their pressure from the feed duct 110 through the flow passages 104,105 and through the connecting duct 111 and the pressure duct 112. The operation of the arrangement as shown in Fig. 15 is such that, when outer axial forces act upon the roll mantle 12, the slide 101,102,103 regulates the pressure passing to the glide bearing elements 16,16a so that said outer axial forces are neutralized. Thus, for example, when the roll mantle 12 moves from the middle position shown in Fig. 15 to the right, the slide 101,102,103 of the regulation device 100 also moves to the right, in which case the middle part 101 of the slide cuts off the pressure connection from the feed duct 110 to the second axial glide bearing element 16a and, correspondingly, opens the pressure connection into the first glide bearing element 16. Thus, underneath the first glide bearing element 16, a pressure is formed, which shifts the roll mantle 12 back to its middle position.

With respect to an alternative and advantageous embodiment of axial support, reference is made in particular to Fig. 2A and to the related description.

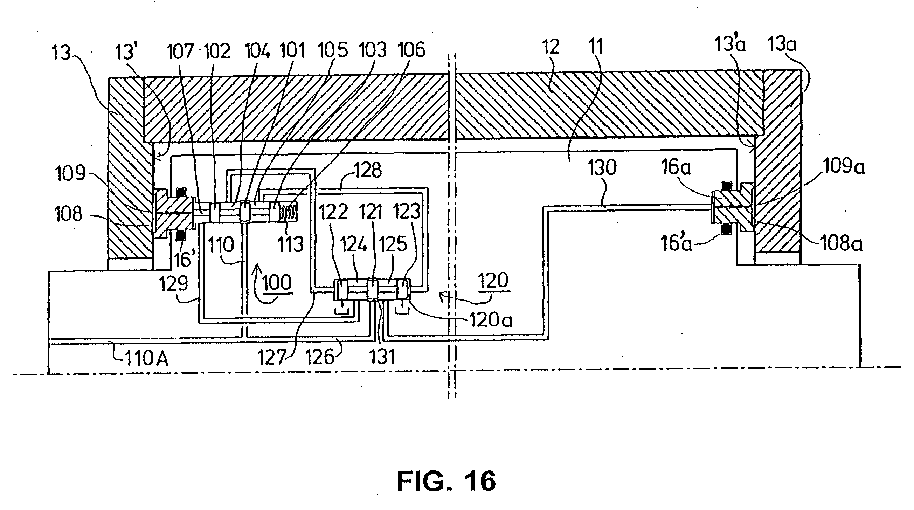

Fig. 16 shows a second embodiment of the axial support of a roll mantle in a roll provided with glide bearings. The embodiment of Fig. 16 differs from that shown in Fig. 15 in the respect that the arrangement of Fig. 16 is additionally provided with a regulation valve 120, which provides a pre-control for the control of the movements of the roll mantle 12. Thus, the arrangement of Fig. 16 is to a great extent similar to the arrangement illustrated in Fig. 4 for the transverse support of the roll mantle 12. The roll itself and the axial glide bearing elements 16,16a are similar to those shown in Fig. 15, and further, the regulation device 100 is similar to that described in relation to Fig. 15, so that in these respects, reference is made to the description related to Fig. 15.

The mode of connection of the regulation device 100 itself differs from that shown in Fig. 15 and, as was already stated above, the embodiment of Fig. 16 is additionally provided with a regulation valve 120 which provides a pre-control. The regulation device 120 comprises a bore 120a, which has been formed into the frame of the regulation device and into which a three-part slide 121,122,123 has been fitted. Into the bore 120a in the regulation valve 120, an annular groove 131 has been formed, through which the regulation valve 120 communicates with the pressure-feed duct 126 of the regulation valve and from said duct 126 further with the main duct 110A, through which the pressure medium is also fed into the feed duct 110 and from it further to the regulation device 100. The flow passages 124,125 that are defined by the middle part 121 and the end parts 122 and 123 of the three-part slide of the regulation valve 120 communicate through the pressure ducts 129,130 with the opposite glide bearing elements 16,16a, and further, the flow passages 104,105 defined by the middle part 101 and the end parts 102,103 of the three-part slide of the regulation device 100 communicate through the pressure-control ducts 127,128 with the rear side of the opposite end parts 122,123 of the slide of the regulation valve 120.

The operation of the arrangement as shown in Fig. 16 is as follows. When an outside axial force is applied to the roll, e.g., in the illustration of Fig. 16 from the left, the roll mantle 12 and the first axial glide bearing element 16 move to the right in Fig. 16. In such a case, the slide of the regulation device 100 also moves to the right, in which case the middle part 101 of the slide closes the second flow passage 105 of the regulation device 100 and opens the first flow passage 104. In such a case, the pressure and the flow of the pressure medium fed to the regulation device 100 along the feed duct 110 can act, through said first flow passage 104, upon the first pressure-control duct and from it behind the first end part 122 of the regulation valve 120. The pressure shifts the slide 121,122,123 of the regulation valve 120 so that the middle part 121 of the slide closes the flow of the pressure medium to the second glide bearing element 16a and, correspondingly, opens the flow through the first pressure duct 129 to underneath the first axial glide bearing element 16. Thus, underneath the first glide bearing element 16, a higher pressure is effective than underneath the second glide bearing element 16a, in which case this higher pressure shifts the roll mantle 12 in the axial direction to its middle position. It is achieved by means of the arrangement that the outside axial forces acting upon the roll mantle 12 are neutralized. It is a difference of the arrangement of Fig. 16 in comparison to Fig. 15 that the regulation valve 120 provides the arrangement of Fig. 16 with attenuation, in which case the movements of correction of the position of the roll mantle 12 are quite soft, and no substantial axial oscillation movement can occur.

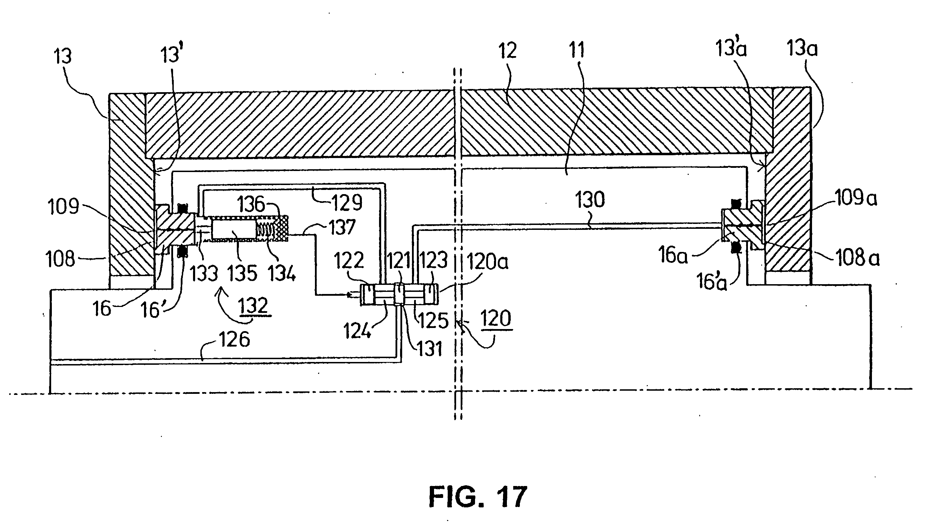

The embodiment shown in Fig. 17 differs from those shown in Figs. 15 and 16 in the respect that the axial glide bearing elements 16,16a are not provided with a hydraulic regulation device 100 corresponding to Figs. 15 and 16, but in the embodiment of Fig. 17 the roll is provided with a position-measurement device 132. In the illustration of Fig. 17, the position-measurement device 132 is fitted behind the first axial glide bearing element 16, and said position-measurement device 132 comprises a frame 136 of the measurement device, into which frame the slide 135 has been fitted displaceably, which slide is provided with a spindle 133. Into the frame 136 of the measurement device, underneath the slide 135, a spring 134 is mounted, which loads the slide 135 so that the spindle 133 is supported against the first glide bearing element 16, in which case the slide 135 of the position-measurement device moves along with the movements of the first axial glide bearing element 16. The embodiment of Fig. 17 is additionally provided with a regulation valve 120 similar to that provided in the arrangement of Fig. 16. The regulation valve 120 distributes the pressure and the flow of the pressure medium coming from the pressure-feed duct 126 through the pressure ducts 129 and 130 to the opposite glide bearing elements 16,16a.

The embodiment of Fig. 17 operates so that, when an outer axial force acts upon the roll mantle 12, e.g., from the left in Fig. 17, this outside force shifts the roll mantle 12 to the right in Fig. 17. In this case, the first glide bearing element 16 and the slide 135 of the position-measurement device 132 also move to the right in a corresponding way. As is shown in the figure, the position-measurement device 132 operates, e.g., electromagnetically, and in such a case it is connected to the regulation valve 120 by the intermediate of an electromagnetic control connection 137. The principle of operation can also be other than electromagnetic. When the slide 135 of the position-measurement device 132 moves to the right, a control is transmitted along the control connection 137 to the regulation valve 120 to shift the slide 121,122,123 of the regulation valve to the right. In such a case, the middle part 121 of the slide of the regulation valve closes the pressure and flow connection to the second axial glide bearing element 16a and, in a corresponding way, opens the connection exclusively to the first axial glide bearing element 16, in which case a higher pressure is formed underneath the first glide bearing element 16, compared with the pressure present underneath the second axial glide bearing element 16a, in which case this higher pressure acts against the outside force and shifts the roll mantle 12 back to its middle position.

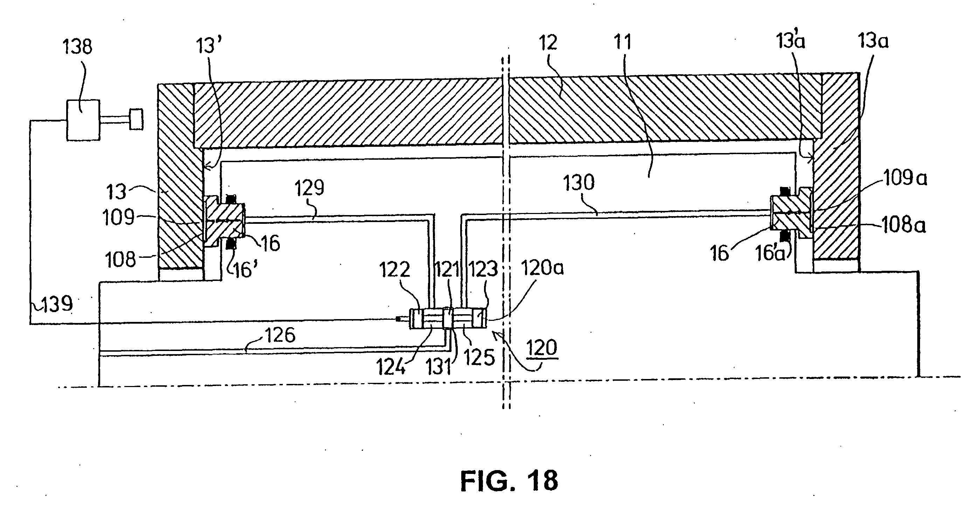

The embodiment of Fig. 18 is identical with that shown in Fig. 17, with the exception that in this embodiment the position-measurement device 138 is arranged outside the roll. In a way corresponding to Fig. 6, the position-measurement device 138 is provided either with a contact-free detector or with a detector that is in contact with the roll end 13, so that, when outside axial forces act upon the roll mantle 12, the position-measurement device gives a control command, corresponding to the axial position of the roll mantle 12, by the intermediate of the control connection 139, to the regulation valve 120, whose construction and operation are identical with the regulation valve described in relation to Fig. 17. Thus, the operation of the embodiment as shown in Fig. 18 is fully similar to that described in relation to Fig. 17.

In Figs. 16, 17 and 18, it was described that the regulation valve 120 is fitted inside the roll. The regulation valve 120 can, of course, also be installed outside the roll, while the operation of the arrangement does not differ from what has been described above. In Figs. 15 to 18, the axial glide bearing elements 16,16a are shown quite schematically, and in respect of their construction they may differ from those shown in the figures, while their operation is, nevertheless, similar to that described above. In the above description, the sealing solutions in the roll have not been dealt with either, which solutions can be accomplished in any known way whatsoever.

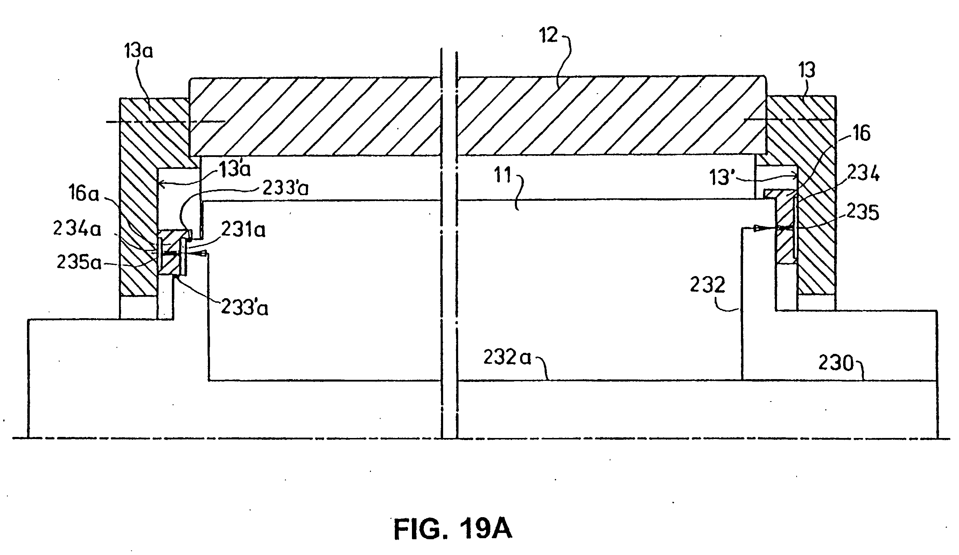

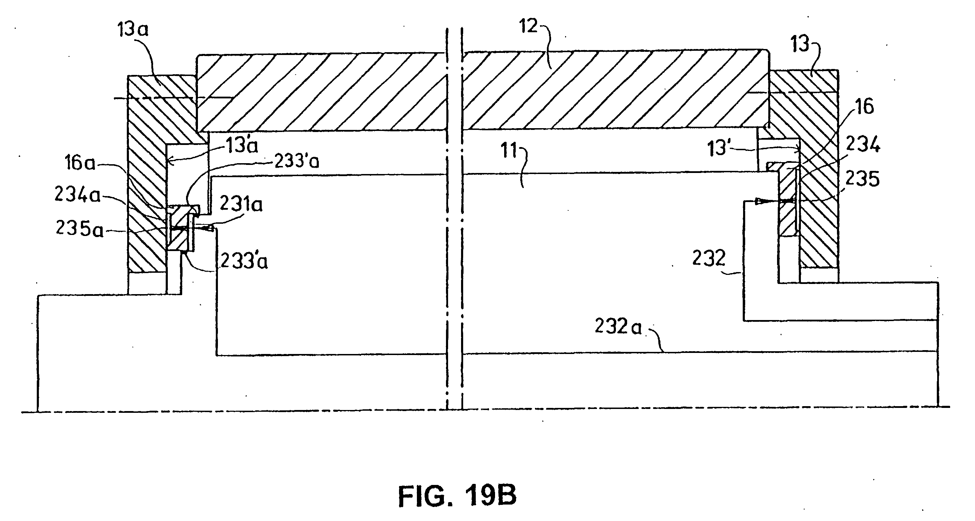

In Figs. 19A and 19B, an alternative solution is illustrated in which the method and the equipment in accordance with the invention are also used for axial support of the roll mantle 12. The exemplifying embodiments shown in Figs. 19A and 19B are in the other respects fully identical, with the exception that, in the embodiment of Fig. 19A, the glide bearing elements 16,16a that act axially in opposite directions are supplied with a pressure medium which is taken from the same pressure source through the pressure duct 230, whereas, in the embodiment of Fig. 19B, the pressure medium is passed to the glide bearing elements 16,16a acting in opposite directions from separate pressure sources. In the embodiments of Figs. 19A and 19B, the roll mantle 12 is, thus, provided with roll ends 13,13a, against whose inner faces 13',13'a glide bearing elements 16,16a are fitted to act in the axial direction. In the embodiments of Figs. 19A and 19B, the glide bearing elements 16,16a are annular glide bearings of the type shown in Fig. 2A, which type of bearings can be considered to be the preferred alternatives in view of the invention. As regards their operation, the glide bearing elements 16,16a are conventional, so that said glide bearing elements 16,16a are provided with fluid pockets 234,234a or equivalent, into which the pressure medium is passed through the glide bearing elements 16,16a through capillary bores 235,235a, so that the glide bearing elements 16,16a are supported against the inner faces of the roll ends 13,13a by the intermediate of fluid films. As is shown in Figs. 19A and 19B, the first glide bearing element 16 is mounted stationarily on the roll axle 11. In axial support, it is not even necessary to use articulated bearings of the sort that were described as being included in the support of the first glide bearing element in the exemplifying embodiments shown in Figs. 7A and 7B. On the other hand, the second glide bearing element 16a that acts in the axial direction is fitted on the roll axle 11 as axially mobile, and behind the glide bearing element 16a a pressurizable cavity space 231a has been formed, which is sealed by means of the seals 233'a, into which the pressure medium is fed, and from which the medium has access to the fluid pockets 234a through the capillary bores 235a. The pressure medium is passed into the cavity space 231 through the feed duct 232a. In stead, the fluid pockets 234 on the first glide bearing element 16 communicate with the feed duct 232 directly through the capillary bores 235. As is shown in Figs. 19A and 19B, the first glide bearing element 16 is larger than the second glide bearing element 16a, and in a way similar to the transverse support of the roll mantle described above, in the preferred exemplifying embodiment, the area of the first glide bearing element 16 is twice as large as the area of the second glide bearing element 16a. By means of such a solution, the same effect is obtained, i.e. that the pressure of the pressure medium passed to the glide bearing elements 16,16a depends exclusively on the axial force applied to the roll from outside. In the preferred exemplifying embodiment, in which the ratio of the areas is two, in the solution in accordance with the invention, the external loads can be compensated for completely.

Above, the invention has been described by way of example with reference to the figures in the accompanying drawing. The invention is, however, not confined to the exemplifying embodiments described in the figures only, but different embodiments of the invention may show variation within the scope of the inventive idea defined in the accompanying patent claims.

The invention concerns a method for fitting a tubular roll mantle of a roll intended for a paper machine or equivalent with glide bearings. In the method the roll mantle (12) is supported on a stationary roll axle (11) by means of hydraulic glide bearing elements (14,14a, 15,16,16a) acting upon the roll mantle (12) or upon the roll ends (13,13a), said bearing elements being loaded hydraulically by means of the pressure of a pressure medium. In the invention, the roll mantle (12) is supported on the roll axle (11) by means of glide bearing elements (15,16,16a) acting radially and/or axially in opposite directions, so that, when an outside force that shifts or attempts to shift the roll mantle (12) in the direction transverse to the radial principal loading direction and in the axial direction is applied to the roll mantle (12), the pressure in the glide bearing element (15;16,16a) placed at the side of the higher loading is adjusted to a level higher than the pressure in the glide bearing element acting in the opposite direction so that the outside forces are neutralized. In the principal loading direction, the roll mantle (12) is allowed to be shifted over a certain distance, in which case, when the roll mantle (12) approaches its preset extreme position in this direction, the movement of the roll mantle (12) is braked down, and finally the movement is stopped in its extreme position by means of the glide bearing elements (14,14a). The invention also concerns a roll that makes use of the method.

## Claims

1. A method for fitting a tubular roll mantle of a roll intended for a paper machine or equivalent with glide bearings, in which method the roll mantle (12) is supported on a stationary roll axle (11) by means of hydraulic glide bearing elements (14, 14a; 15, 15a; 16, 16a) acting upon the roll mantle (12) or upon the roll ends (13, 13a), said bearing elements being loaded hydraulically by means of the pressure of a pressure medium, and said roll being loaded from outside radially in the direction of at least one plane, i.e. in a so-called principal loading direction, (A), **characterized in that** the roll mantle (12) is supported on the roll axle (11) by means of glide bearing elements (14, 14a) acting radially in opposite directions substantially in the principal loading direction, so that the roll mantle (12) is allowed to be shifted over a certain distance in said principal loading direction, in which case, when the roll mantle (12) approaches its preset extreme position in this direction, the movement of the roll mantle (12) is braked down and finally the movement is stopped in its extreme position by means of the glide bearing elements (14, 14a).

2. A method as claimed in claim 1, charaterized in that the pressures in the glide bearding elements (14, 14a) acting in opposite directions are regulated by means of a regulation device or by means of an equivalent regulation valve, which receives its control directly from the movement of the roll mantle (12).

3. A method as claimed in claims 1 or 2, **characterized in that** the regulation device is controlled by means of the movement of one (14) of the glide bearing elements acting in opposite directions so as to distribute the pressure and the flow to said glide bearing elements (14, 14a).

4. A method as claimed in any of the preceding claims, **characterized in that** a separate regulation valve is controlled by means of the pressure of a regulation device that is positioned in accordance with the position of the roll mantle (12), by means of which regulation valve the pressure and the flow are distributed in the desired proportion to the glide bearding elements (14, 14a) acting in opposite directions.

5. A method as claimed in claim 1, **characterized in that** the position in the roll mantle (12) is measured by means of an electromagnetic or equivalent position-measurement device (92, 98), by whose means a control command required by the position of the roll mantle (12) is given to the regulation valve (80) that regulates the position of the roll mantle (12) to distribute the pressure in a certain proportion to the glide bearding elements (14, 14a) acting in opposite direction.

6. A method as claimed in claim 5, **characterized in that** the position of the roll mantle (12) is measured from inside the roll by the intermediate of a glide bearing element (14).

7. A method as claimed in claim 5, **characterized in that** the position of the roll mantle (12) is measured from outside the roll from the outer face of the roll (10).

8. A method as claimed in any of the preceding claims, **characterized in that** the roll mantle (12) is supported radially in the principal loading direction, in particular in the direction of the nip plane, in which direction the roll (10) is supported by means of hydraulic loading elements (17), and in the direction transverse to said direction.

9. A method as claimed in claim 1, **characterized in that** the load-setting pressure proper and the flow to said hydraulic glide bearing elements (14, 14a) are cut-off when the roll mantle (12) reaches its preset extreme position.

10. A method as claimed in claim 1, **characterized in that** a braking pressure in the glide bearing elements (14, 14a), which act radially in opposite directions is regulated by means of means (326, 326a) for regulation of the braking pressure, so that , when the roll mantle (12) approaches its preset extreme position in said direction, the movement of the roll mantle (12) is braked down by means of the device (326, 326a) for regulation of the braking pressure.

11. A method as claimed in claim 10, **characterized in that** the access of the braking pressure to the glide bearing elements (14, 14a) is controlled by means of the movement of the roll mantle (12) so that the glide bearing element (14, 14a) which moves along with the movement of the roll mantle (12) opens a flow passage from the braking-pressure regulation device (326, 326a) to the glide bearing element (14, 14a) when the movement of the roll mantle (12) approaches its preset extreme position.

12. A method as claimed in claim 10 or 11, **characterized in that**, when the roll mantle (12) approaches its preset extreme position, the flow passage for the braking pressure to the glide bearing element (14, 14a) is opened immediately substantially completely.

13. A method as claimed in any of the claims 10 to 12, **characterized in that** the load-setting pressure proper and the flow to the glide bearing elements (14, 14a) are switched off when the roll mantle (12) reaches its preset extreme position.

14. A method as claimed in any of the claims 10 to 13, **characterized in that** the roll mantle (12) is supported substantially in the direction of the nip plane (A) as well as in the direction transverse to said nip plane.

15. A tubular roll for a paper machine or equivalent, the roll mantle of said roll being supported revolvingly on a stationary roll axle (11) by means of glide bearing elements (14, 14a; 15, 15a; 16, 16a;) that act upon the inner face (12) of the roll mantle (12) and/or upon the roll ends (13, 13a) of the roll said glide bearing elements being loaded by means of the pressure of a hydraulic pressure medium, and said roll being loaded from outside radially in the direction of at least one plane, i.e. in a so-called principal loading direction, (A) , **characterized in that** the roll mantle (12) is supported on the roll axle (11) by means of glide bearing elements (14, 14a) that are loaded radially in opposite directions substantially in the principal loading direction, which glide bearing elements are connected with a regulation device (66) or with a corresponding regulation valve (80), which is arranged to distribute the pressures in the glide bearing elements (14, 14a) acting in opposite directions so that a certain preset maximum movement of shifting is permitted for the roll mantle (12), in which case, when the roll mantle (12) approaches its extreme position, the regulation device (66) or the corresponding regulation valve (80) is fitted to control the pressure to the glide bearing elements (14, 14a) so as to brake down the movement of the roll mantle (12) and finally to stop the roll mantle in its extreme position.

16. A roll as claimed in claim 15, **characterized in that** the regulation device (66) or the corresponding regulation valve (80) is connected to receive its control directly from the movement of the roll mantle (12).

17. A roll as claimed in claim 15 or 16, **characterized in that** the regulation device (66) comprises a valve, which is connected in connection with one (14) of the glide bearing elements acting in opposite directions, so that the movement of said glide bearing element (14) controls the slide in the valve (66) of the regulation device so as to distribute the pressure and the flow to the glide bearing elements (14, 14a).

18. A roll as claimed in any of the claims 15 to 17, **characterized in that** the regulation device (66) is arranged to regulate a separate regulation valve (80), which distributes the pressure and the flow to the glide bearing elements (14, 14a) acting in opposite directions.

19. A roll as claimed in claim 15 or 16, **characterized in that** the roll (10) is provided with an electromagnetic or equivalent position-measurement device (92, 98), which is fitted to measure the position of the roll mantle (12) and to give the regulation valve (80) that regulates the position of the roll mantle (12) a control command to distribute the pressure in a certain proportion to the glide bearing elements (14, 14a) acting in opposite directions.

20. A roll as claimed in claim 19, **characterized in that** the position-measurement device (92) is fitted inside the roll in connection with a glide bearing element (14).

21. a roll as claimed in claim 19, **characterized in that** the position-measurement device (98) is fitted outside the roll to measure the position of the roll mantle (12) from the outer face of the roll mantle.

22. A roll as claimed in any of the claims 15 to 21, **characterized in that** the glide bearing elements (14, 14a) which act radially in opposite directions are arranged in the principal loading direction of the roll, in particular in the direction of the nip plane, in which the roll (10) is supported against loading on the roll axle (11) across its axial length by means of hydraulic loading elements (17), and in the direction transverse to said direction.

23. A roll as claimed in claim 15, **characterized in that** the regulation device (66) or the corresponding regulation valve (80) is arranged to cut-off the setting pressure proper and the flow of the pressure medium passing to the hydraulic glide bearing elements (14, 14a) when the roll mantle (12) has reached its preset extreme position.

24. A tubular as claimed in claim 15, **characterized in that** each of the glide bearing elements (14, 14a), which act radially in opposite directions is connected with a braking-pressure regulation device (326, 326a) of its own, so that when the roll mantle (12) approaches its extreme position, the braking-pressure regulation device (326, 326a) is arranged to feed the braking pressure into the glide bearing elements (14, 14a) so as to brake down the movement of the roll mantle (12).

25. A roll as claimed in claim 24, **characterized in that** the braking-pressure regulation device (326, 326a) is connected with the corresponding glide bearing element (14, 14a) so that said regulation device (326, 326a) is connected to be opened under positive control and to allow the braking pressure to pass to the glide bearing elements (14, 14a), based on the movement of the roll mantle (12).

26. A roll as claimed in claim 24, **characterized in that** the roll is provided with electric and/or electromagnetic connector and control means (340, 340a; 341) which are connected with the braking-pressure regulation devices (326, 326a) so as to open said regulation device (326, 326a) electrically and to allow the braking pressure to pass to the corresponding glide bearing element (14,14a) based on the movement of the roll mantle (12).

27. A roll as claimed in claim 24,25 or 26, **characterized in that** the braking-pressure regulation device (326) is a back valve, which is closed when the roll mantle (12) is in a normal position, and prevents access of the braking pressure to the glide bearing element (14,14a), and which is opened fully when the roll mantle (12) is at or near its extreme position, and allows the full braking pressure to act upon the glide bearing element (14,14a).

28. A roll as claimed in any of the claims 24, 25 or 27, charcterized in that, onto the piston part of the glide bearing element (14, 14a), members (321, 321a; 324, 324a) have been formed which open a flow passage from the braking-pressure regulation device (326, 326a) to the glide bearing element (14, 14a) when the roll mantle (12) is placed near its extreme position.

29. A roll as claimed in claim 28, **characterized in that**, onto the piston part of the glide bearing element (14, 14a), a pin (324, 324a) or equivalent has been fitted, which opens the closing piece (331) of the back valve of the regulation device (326) when the roll mantle (12) is placed near its extreme position.

30. A roll as claimed in any of the claims 24 to 29, **characterized in that** the hydraulic glide bearing elements (14, 14a), are arranged in the nip plane (A) in opposite directions in relation to one another, and that the roll is additionally provided with glide bearing elements (15, 15a) that act in the direction transverse to the nip plane.

31. A roll as claimed in any of the claims 24 to 29, **characterized in that** glide bearing elements that act substantially in the principal loading direction (A) are arranged in pairs and diverge from said principal loading direction (A) to an equally large extent to each side of said direction.

**Patentansprüche**

1. Verfahren zum Ausstatten eines rohrförmigen Walzenmantels einer für eine Papiermaschine oder dergleichen bestimmten Walze mit Gleitlagern, bei welchem Verfahren der Walzenmantel (12) an einer feststehenden Walzenachse (11) mit Hilfe von hydraulischen Gleitlagerelementen (14, 14a; 15, 15a; 16, 16a) abgestützt wird, die auf den Walzenmantel (12) oder auf die Walzenenden (13, 13a) wirken, wobei die Lagerelemente mit Hilfe des Drucks eines Druckmittels hydraulisch belastet sind und wobei die Walze von außen radial in der Richtung zumindest einer Ebene, das heißt in einer sogenannten Hauptbelastungsrichtung (A) belastet wird, **dadurch gekennzeichnet, dass** der Walzenmantel (12) an der Walzenachse (11) mit Hilfe von Gleitlagerelementen (14, 14a) abgestützt ist, die radial in entgegengesetzten Richtungen im Wesentlichen in der Hauptbelastungsrichtung wirken, so dass es dem Walzenmantel (12) möglich ist, um eine gewisse Strecke in der Hauptbelastungsrichtung verschoben zu werden, in welchem Fall dann, wenn der Walzenmantel (12) sich seiner vorgegebenen Extremposition in dieser Richtung nähert, mittels der Gleitlagerelemente (14, 14a) die Bewegung des Walzenmantels (12) abgebremst wird und schließlich die Bewegung in seiner Extremposition gestoppt wird.

2. Verfahren nach Anspruch 1, **dadurch gekennzeichnet, dass** die Drücke in den in entgegengesetzten Richtungen wirkenden Gleitlagerelementen (14, 14a) reguliert werden mit Hilfe einer Regulierungsvorrichtung oder mit Hilfe eines gleichwirkenden Regulierungsventils, das/die seine/ihre Steuerung direkt aus der Bewegung des Walzenmantels (12) erhält.

3. Verfahren nach Anspruch 1 oder 2, **dadurch gekennzeichnet, dass** die Regulierungsvorrichtung mit Hilfe der Bewegung eines (14) der in entgegengesetzten Richtungen wirkenden Gleitlagerelemente so gesteuert wird, dass sie den Druck und die Strömung zu den Gleitlagerelementen (14, 14a) verteilt.

4. Verfahren nach einem der vorangehenden Ansprüche, **dadurch gekennzeichnet, dass** ein separates Regulierungsventil mit Hilfe des Drucks einer Regulierungsvorrichtung gesteuert wird, die entsprechend der Position des Walzenmantels (12) eingestellt wird, wobei mit Hilfe des Regulierungsventils der Druck und die Strömung im gewünschten Verhältnis auf die in entgegengesetzten Richtungen wirkenden Gleitlagerelemente (14, 14a) verteilt werden.

5. Verfahren nach Anspruch 1, **dadurch gekennzeichnet, dass** die Position des Walzenmantels (12) mit Hilfe einer elektromagnetischen oder gleichwirkenden Positionsmessvorrichtung (92, 98) gemessen wird, mit deren Hilfe ein aufgrund der Position des Walzenmantels (12) erforderlicher Steuerbefehl auf das die Position des Walzenmantels (12) regulierende Regulierungsventil (80) gegeben wird, damit es den Druck auf die in entgegengesetzten Richtungen wirkenden Gleitlagerelemente (14, 14a) in einem gewissen Verhältnis verteilt.

6. Verfahren nach Anspruch 5, **dadurch gekennzeichnet, dass** die Position des Walzenmantels (12) mittels eines Gleitlagerelementes (14) von innerhalb der Walze gemessen wird.

7. Verfahren nach Anspruch 5, **dadurch gekennzeichnet, dass** die Position des Walzenmantels (12) von außerhalb der Walze von der Außenfläche der Walze (10) gemessen wird.

8. Verfahren nach einem der vorangehenden Ansprüche, **dadurch gekennzeichnet, dass** der Walzenmantel (12) radial abgestützt ist in der Hauptbelastungsrichtung, insbesondere in der Richtung der Spaltebene, in welcher Richtung die Walze (10) mit Hilfe von hydraulischen Belastungselementen (17) abgestützt ist, und in der dazu quer verlaufenden Richtung.

9. Verfahren nach Anspruch 1, **dadurch gekenn-**

**zeichnet, dass** der eigentliche Last-Einstelldruck und die Strömung zu den hydraulischen Gleitlagerelementen (14, 14a) abgesperrt werden, wenn der Walzenmantel (12) seine vorgegebene Extremposition erreicht.

10. Verfahren nach Anspruch 1, **dadurch gekennzeichnet, dass** ein Bremsdruck in den Gleitlagerelementen (14, 14a), die radial in entgegengesetzten Richtungen wirken, reguliert wird mittels einer Einrichtung (326, 326a) zur Regulierung des Bremsdrucks, so dass dann, wenn der Walzenmantel sich seiner vorgegebenen Extremposition in dieser Richtung nähert, die Bewegung des Walzenmantels (12) mittels der Vorrichtung (326, 326a) zur Regulierung des Bremsdruckes abgebremst wird.

11. Verfahren nach Anspruch 10, **dadurch gekennzeichnet, dass** der Zutritt des Bremsdrucks zu den Gleitlagerelementen (14, 14a) mittels der Bewegung des Walzenmantels (12) so gesteuert wird, dass das Gleitlagerelement (14, 14a), das sich zugleich mit der Bewegung des Walzenmantels (12) bewegt, einen Strömungsdurchlass von der Bremsdruck-Regulierungsvorrichtung (326, 326a) zu dem Gleitlagerelement (14, 14a) öffnet, wenn die Bewegung des Walzenmantels (12) sich dessen Extremposition annähert.

12. Verfahren nach Anspruch 10 oder 11, **dadurch gekennzeichnet, dass**, wenn sich der Walzenmantel (12) seiner vorgegebenen Extremposition annähert, der Strömungsdurchlass für den Bremsdruck zum Gleitlagerelement (14, 14a) augenblicklich praktisch vollständig geöffnet wird.

13. Verfahren nach einem der Ansprüche 10 bis 12, **dadurch gekennzeichnet, dass** der eigentliche Last-Einstelldruck und die Strömung zu den Gleitlagerelementen (14, 14a) abgeschaltet werden, wenn der Walzenmantel (12) seine vorgegebene Extremposition erreicht.

14. Verfahren nach einem der Ansprüche 10 bis 13, **dadurch gekennzeichnet, dass** der Walzenmantel (12) abgestützt wird im Wesentlichen in der Richtung der Spaltebene (A) sowie auch in der Richtung quer zu der Spaltebene.

15. Rohrförmige Walze für eine Papiermaschine oder dergleichen, wobei der Walzenmantel der Walze drehbar an einer feststehenden Walzeachse (11) mit Hilfe von Gleitlagerelementen (14, 14a; 15, 15a; 16, 16a) abgestützt ist, die auf die Innenfläche (12) des Walzenmantels (12) und/oder die Walzenenden (13, 13a) der Walze wirken, wobei die Gleitgerelemente mit Hilfe des Drucks eines hydraulischen Druckmittels belastet sind und wobei die Walze von außen radial in der Richtung zumindest einer Ebene, das heißt in einer sogenannten Hauptbelastungsrichtung (A), belastet ist, **dadurch gekennzeichnet, dass** der Walzenmantel (12) an der Walzenachse (11) mit Hilfe von Gleitlagerelementen (14, 14a) abgestützt ist, die radial in entgegengesetzten Richtungen im Wesentlichen in der Hauptbelastungsrichtung belastet sind, wobei diese Gleitlagerelemente verbunden sind mit einer Regulierungsvorrichtung (66) oder mit einem entsprechenden Regulierungsventil (80), das/die zur Verteilung der Drücke in den in entgegengesetzten Richtungen wirkenden Gleitlagerelementen so angeordnet ist, dass dem Walzenmantel (12) eine gewisse vorgegebene Maximalbewegung der Verschiebung möglich ist, in welchem Fall dann, wenn der Walzenmantel (12) sich seiner Extremposition nähert, die Regulierungsvorrichtung (66) oder das entsprechende Regulierungsventil (80) so vorgesehen ist, dass es/sie den Druck zu den Gleitlagerelementen (14, 14a) so steuert, dass die Bewegung des Walzenmantels (12) abgebremst wird und dass schließlich der Walzenmantel in seiner Extremposition gestoppt wird.

16. Walze nach Anspruch 15, **dadurch gekennzeichnet, dass** die Regulierungsvorrichtung (66) oder das entsprechende Regulierungsventil (80) so verbunden ist, dass es/sie seine/ihre Steuerung direkt aus der Bewegung des Walzenmantels (12) erhält.

17. Walze nach Anspruch 15 oder 16, **dadurch gekennzeichnet, dass** die Regulierungsvorrichtung (66) ein Ventil aufweist, das in Verbindung mit einem der in entgegengesetzten Richtungen wirkenden Gleitlagerelemente so verbunden ist, dass die Bewegung dieses Gleitlagerelementes (14) den Schieber im Ventil (66) der Regulierungsvorrichtung so steuert, dass er den Druck und die Strömung auf die Gleitlagerelemente (14, 14a) verteilt.

18. Walze nach einem der Ansprüche 15 bis 17, **dadurch gekennzeichnet, dass** die Regulierungsvorrichtung (66) so angeordnet ist, dass sie ein getrenntes Regulierungsventil (80) reguliert, das den Druck und die Strömung auf die in entgegengesetzten Richtungen wirkenden Gleitlagerelemente (14, 14a) verteilt.

19. Walze nach Anspruch 15 oder 16, **dadurch gekennzeichnet, dass** die Walze (10) mit einer elektromagnetischen oder gleichwirkenden Positionsmessvorrichtung (92, 98) versehen ist, die vorgesehen ist zum Messen der Position des Walzenmantels (12) und zur Lieferung eines Steuerbefehls an das Regulierungsventil (80), das die Position des Walzenmantels (12) reguliert, damit es den Druck in einem gewissen Verhältnis auf die in entgegengesetzten Richtungen wirkenden Gleitlagerelemente (14, 14a) verteilt.

**20.** Walze nach Anspruch 19, **dadurch gekennzeichnet, dass** die Positionsmessvorrichtung (92) innerhalb der Walze in Verbindung mit einem Gleitlagerelement (14) montiert ist.

**21.** Walze nach Anspruch 19, **dadurch gekennzeichnet, dass** die Positionsmessvorrichtung (98) außerhalb der Walze montiert ist und die Position des Walzenmantels (12) von der Außenfläche des Walzenmantels misst.

**22.** Walze nach einem der Ansprüche 15 bis 21, **dadurch gekennzeichnet, dass** die in radialer Richtung in entgegengesetzten Richtungen wirkenden Gleitlagerelemente (14, 14a) in der Hauptbelastungsrichtung der Walze angeordnet sind, insbesondere in der Richtung der Spaltebene, in der die Walze (10) gegen Belastung an der Walzenachse (11) über deren gesamte Länge mit Hilfe von hydraulischen Belastungselementen (17) abgestützt ist, und in der dazu quer verlaufenden Richtung.

**23.** Walze nach Anspruch 15, **dadurch gekennzeichnet, dass** die Regulierungsvorrichtung (66) oder das entsprechende Regulierungsventil (80) derart ausgebildet ist, dass es/sie den eigentlichen Einstelldruck und die Strömung des zu den hydraulischen Gleitlagerelementen (14, 14a) strömenden Druckmittels absperrt, wenn der Walzenmantel (12) seine vorgegebene Extremposition erreicht hat.

**24.** Walze nach Anspruch 15, **dadurch gekennzeichnet, dass** jedes der radial in entgegengesetzten Richtungen wirkenden Gleitlagerelemente (14, 14a) mit einer eigenen Bremsdruck-Regulierungsvorrichtung (326, 326a) verbunden ist, so dass dann, wenn der Walzenmantel (12) sich seiner Extremposition nähert, die Bremsdruck-Regulierungsvorrichtung (326, 326a) den Bremsdruck in die Gleitlagerelemente (14, 14a) einspeisen kann, damit die Bewegung des Walzenmantels (12) abgebremst wird.

**25.** Walze nach Anspruch 24, **dadurch gekennzeichnet, dass** die Bremsdruck-Regulierungsvorrichtung (326, 326a) mit dem entsprechenden Gleitlagerelement (14, 14a) so verbunden ist, dass diese Regulierungsvorrichtung (326, 326a) so angeschlossen ist, dass sie in Abhängigkeit von der Bewegung des Walzenmantels (12) unter zwangsläufiger Steuerung geöffnet wird und dass sie die Zufuhr des Bremsdrucks zu den Gleitlagerelementen (14, 14a) ermöglicht.

**26.** Walze nach Anspruch 24, **dadurch gekennzeich-**

net, dass die Walze versehen ist mit einem elektrischen und/oder elektromagnetischen Konnektor und einer Steuereinrichtung (340, 340a; 341), die mit den Bremsdruck-Regulierungsvorrichtungen (326, 326a) so verbunden sind, dass in Abhängigkeit von der Bewegung des Walzenmantels (12) die Regulierungsvorrichtung (326, 326a) elektrisch geöffnet wird und dass es dem Bremsdruck ermöglicht wird, zu dem entsprechenden Gleitlagerelement (14, 14a) zu gelangen.

**27.** Walze nach Anspruch 24, 25 oder 26, **dadurch gekennzeichnet, dass** die Bremsdruck-Regulierungsvorrichtung (326) ein Rückschlagventil ist, das geschlossen ist, wenn der Walzenmantel (12) in einer Normalposition ist, und die Zufuhr des Bremsdrucks zu dem Gleitlagerelement (14, 14a) verhindert und das vollständig geöffnet ist, wenn der Walzenmantel (12) sich in oder nahe seiner Extremposition befindet, und ermöglicht, dass der volle Bremsdruck auf das Gleitlagerelement (14, 14a) wirkt.

**28.** Walze nach einem der Ansprüche 24, 25 oder 27, **dadurch gekennzeichnet, dass** auf dem Kolbenteil des Gleitlagerelementes (14, 14a) Elemente (321, 321a; 324, 324a) ausgebildet sind, die einen Strömungsdurchlass von der Bremsdruck-Regulierungsvorrichtung (326, 326a) zu dem Gleitlagerelement (14, 14a) öffnen, wenn der Walzenmantel (12) nahe seiner Extremposition angeordnet ist.

**29.** Walze nach Anspruch 28, **dadurch gekennzeichnet, dass** auf dem Kolbenteil des Gleitlagerelementes (14, 14a) ein Stift (324, 324a) oder dergleichen vorgesehen ist, der das Schließteil (331) des Rückschlagventils der Regulierungsvorrichtung (326) öffnet, wenn der Walzenmantel (12) nahe seiner Extremposition angeordnet ist.

**30.** Walze nach einem der Ansprüche 24 bis 29, **dadurch gekennzeichnet, dass** die hydraulischen Gleitlagerelemente (14, 14a) in der Spaltebene (A) in zueinander entgegengesetzten Richtungen angeordnet sind und dass die Walze zusätzlich mit Gleitlagerelementen (15, 15a) versehen ist, die in der zu der Spaltebene quer verlaufenden Richtung wirken.

**31.** Walze nach einem der Ansprüche 24 bis 29, **dadurch gekennzeichnet, dass** die Gleitlagerelemente, die im Wesentlichen in der Hauptbelastungsrichtung (A) wirken, paarweise angeordnet sind und von der Hauptbelastungsrichtung (A) in gleichem Ausmaß zu jeder Seite dieser Richtung abweichen.

**Revendications**

1. Procédé de montage d'une enveloppe de cylindre tubulaire d'un cylindre prévu pour une machine à papier ou équivalent avec des paliers glissants, l'enveloppe de cylindre (12) dans ce procédé étant supportée sur un axe de cylindre fixe (11) au moyen d'éléments de palier glissants hydrauliques (14, 14a ; 15, 15a; 16, 16a) agissant sur l'enveloppe de cylindre (12) ou sur les extrémités de cylindre (13, 13a), lesdits éléments de palier étant chargés de manière hydraulique au moyen de la pression d'un fluide sous pression, et ledit cylindre étant chargé depuis l'extérieur radialement dans la direction d'au moins un plan, c'est-à-dire dans une direction de charge dite principale (A), **caractérisé en ce que** l'enveloppe de cylindre (12) est supportée sur l'axe de cylindre (11) au moyen d'éléments de palier glissants (14, 14a) qui agissent radialement dans des directions opposées sensiblement dans la direction de charge principale, de telle sorte que l'enveloppe de cylindre (12) peut être déplacée sur une certaine distance dans ladite direction de charge principale, auquel cas, lorsque l'enveloppe de cylindre (12) s'approche de sa position extrême prédéterminée dans cette direction, le mouvement de l'enveloppe de cylindre (12) est freiné et finalement le mouvement est arrêté dans sa position extrême au moyen des éléments de palier glissants (14, 14a).

2. Procédé selon la revendication 1, **caractérisé en ce que** des pressions dans les éléments de palier glissants (14, 14a) agissant dans des directions opposées sont régulées au moyen d'un dispositif de régulation ou au moyen d'une soupape de régulation équivalente, qui reçoit sa commande directement du déplacement de l'enveloppe de cylindre (12).

3. Procédé selon la revendication 1 ou 2, **caractérisé en ce que** le dispositif de régulation est commandé au moyen du mouvement d'un (14) des éléments de palier glissants agissant dans des directions opposées de façon à répartir la pression et l'écoulement vers lesdits éléments de palier glissants (14, 14a).

4. Procédé selon l'une quelconque des revendications précédentes, **caractérisé en ce qu'**une soupape de régulation séparée est commandée au moyen de la pression d'un dispositif de régulation qui est positionné en fonction de la position de l'enveloppe de cylindre (12), la pression et l'écoulement étant répartis au moyen de cette soupape de régulation dans la proportion souhaitée vers les éléments de palier glissants (14, 14a) agissant dans des directions opposées.

5. Procédé selon la revendication 1, **caractérisé en ce que** la position dans l'enveloppe de cylindre (12) est mesurée au moyen d'un dispositif de mesure de position électromagnétique ou équivalent (92, 98), et par ces moyens, une commande exigée par la position de l'enveloppe de cylindre (12) est transmise à la soupape de régulation (80) qui régule la position de l'enveloppe de cylindre (12) de façon à répartir la pression dans une certaine proportion vers les éléments de palier glissants (14, 14a) agissant dans une direction opposée.

6. Procédé selon la revendication 5, **caractérisé en ce que** la position de l'enveloppe de cylindre (12) est mesurée depuis l'intérieur du cylindre par l'intermédiaire d'un élément de palier glissant (14).

7. Procédé selon la revendication 5, **caractérisé en ce que** la position de l'enveloppe de cylindre (12) est mesurée de l'extérieur du cylindre depuis la face extérieure du cylindre (10).

8. Procédé selon l'une quelconque des revendications précédentes, **caractérisé en ce que** l'enveloppe de cylindre (12) est supportée radialement dans la direction de charge principale, en particulier dans la direction du plan de pincement, le cylindre (10) étant supporté dans cette direction au moyen d'éléments de charge hydraulique (17), et dans la direction transversale à ladite direction.

9. Procédé selon la revendication 1, **caractérisé en ce que** la pression de réglage de charge correcte et l'écoulement vers lesdits éléments de palier glissants hydrauliques (14, 14a) sont coupés lorsque l'enveloppe de cylindre (12) atteint sa position extrême prédéterminée.

10. Procédé selon la revendication 1, **caractérisé en ce qu'**une pression de freinage dans les éléments de palier glissants (14, 14a) qui agit radialement dans des directions opposées, est régulée à l'aide de moyens (326, 326a) pour la régulation de la pression de freinage, de telle sorte que, lorsque l'enveloppe de cylindre (12) s'approche de sa position extrême prédéterminée dans ladite direction, le mouvement de l'enveloppe de cylindre (12) est freiné au moyen du dispositif (326, 326a) pour la régulation de la pression de freinage.

11. Procédé selon la revendication 10, **caractérisé en ce que** l'accès de la pression de freinage aux éléments de palier glissants (14, 14a) est commandé au moyen du mouvement de l'enveloppe de cylindre (12) de telle sorte que l'élément de palier glissant (14, 14a) qui se déplace avec le mouvement de l'enveloppe de cylindre (12) ouvre un passage d'écoulement depuis le dispositif de régulation de pression de freinage (326, 326a) vers l'élément de palier glissant (14, 14a) lorsque le mouvement de l'enveloppe de cylindre (12) s'approche de sa position extrême prédéterminée.

12. Procédé selon la revendication 10 ou 11, **caractérisé en ce que**, lorsque l'enveloppe de cylindre (12) s'approche de sa position extrême prédéterminée, le passage d'écoulement pour la pression de freinage vers l'élément de palier glissant (14, 14a) est ouvert immédiatement de manière sensiblement complète.

13. Procédé selon l'une quelconque des revendications 10 à 12, **caractérisé en ce que** la pression de réglage de charge correcte et l'écoulement vers les éléments de palier glissants hydrauliques (14, 14a) sont arrêtés lorsque l'enveloppe de cylindre (12) atteint sa position extrême prédéterminée.

14. Procédé salon l'une quelconque des revendications 10 à 13, **caractérisé en ce que** l'enveloppe de cylindre (12) est supportée sensiblement dans la direction du plan de pincement (A) ainsi que dans la direction transversale au dit plan de pincement.

15. Cylindre tubulaire pour une machine à papier ou équivalent, l'enveloppe de cylindre dudit cylindre étant supportée de manière rotative sur un axe de cylindre fixe (11) au moyen d'éléments de palier glissants (14, 14a ; 15, 15a ; 16, 16a) qui agissent sur la face interne de l'enveloppe de cylindre (12) et/ou sur les extrémités de cylindre (13, 13a) du cylindre, lesdits éléments de palier glissants étant chargés au moyen de la pression d'un fluide de pression hydraulique, et ledit cylindre étant chargé depuis l'extérieur radialement dans la direction d'au moins un plan, c'est-à-dire dans une direction de charge dite principale (A), **caractérisé en ce que** l'enveloppe de cylindre (12) est supportée sur l'axe de cylindre (11) au moyen d'éléments de paller glissants (14, 14a) qui sont chargés radialement dans des directions opposées sensiblement dans la direction de charge principale, lesquels éléments de palier glissants sont reliés à un dispositif de régulation (66) ou à une soupape de régulation (80) correspondante, qui est prévue pour distribuer les pressions dans les éléments de palier glissants (14, 14a) agissant dans des directions opposées de lelle sorte qu'un certain mouvement maximum prédéterminé de déplacement est permis pour l'enveloppe de cylindre (12), auquel cas, lorsque l'enveloppe de cylindre (12) s'approche de sa position extrême, le dispositif de régulation (66) ou la soupape de régulation correspondante (80) est prévu pour commander la pression des éléments de palier glissants (14, 14a) de façon à freiner le mouvement de l'enveloppe de cylindre (12) et finalement arrêter l'enveloppe de cylindre dans sa position extrême.

16. Cylindre selon la revendication 15, **caractérisé en ce que** le dispositif de régulation (66) ou la soupape de régulation correspondante (80) est relié afin de recevoir sa commande directement du mouvement de l'enveloppe de cylindre (12).

17. Cylindre selon la revendication 15 ou 16, **caractérisé en ce que** le dispositif de régulation (66) comporte une soupape, qui est reliée en liaison avec un (14) des éléments de palier glissants agissant dans des directions opposées, de telle sorte que le mouvement dudit élément de palier glissant (14) commande le glissement dans la soupape (66) du dispositif de régulation de façon à distribuer la pression et l'écoulement vers les éléments de palier glissants (14, 14a).

18. Cylindre selon l'une quelconque des revendications 15 à 17, **caractérisé en ce que** le dispositif de régulation (66) est prévu pour réguler une soupape de régulation séparée (80), qui distribue la pression et l'écoulement vers les éléments de palier glissants (14, 14a) agissant dans des directions opposées.

19. Cylindre selon la revendication 15 ou 16, **caractérisé en ce que** le cylindre (10) est pourvu d'un dispositif de mesure de position électromagnétique ou équivalent (92, 98) qui est prévu pour mesurer la position de l'enveloppe de cylindre (12) et pour donner à la soupape de régulation (80) qui régule la position de l'enveloppe de cylindre (12) une commande afin de distribuer la pression dans une certaine proportion vers les éléments de palier glissants (14, 14a) agissant dans des directions opposées.

20. Cylindre selon la revendication 19, **caractérisé en ce que** le dispositif de mesure de pression (92) est monté à l'intérieur du cylindre on liaison avec un élément de palier glissant (14).

21. Cylindre selon la revendication 19, **caractérisé en ce que** le dispositif de mesure de pression (98) est monté à l'extérieur du cylindre afin de mesurer la position de l'enveloppe de cylindre (12) depuis la face extérieure de l'enveloppe de cylindre.

22. Cylindre selon l'une quelconque des revendications 15 à 21, **caractérisé en ce que** les éléments de palier glissants (14, 14a) qui agissent radialement dans des directions opposées sont disposés dans la direction de charge principale du cylindre, en particulier dans la direction du plan de pincement, dans lequel le cylindre (10) est supporté à l'encontre de la charge sur l'axe de cylindre (11) sur sa longueur axiale au moyen d'éléments de charge hydraulique (17), et dans la direction transversale à ladite direction.

23. Cylindre selon la revendication 15, **caractérisé en ce que** le dispositif de régulation (66) ou la soupape de régulation correspondante (80) est prévu pour couper la pression de réglage correcte et l'écoulement du fluide sous pression qui passe vers les éléments de palier glissants (14, 14a) lorsque l'enveloppe de cylindre (12) a atteint sa position extrême prédéterminée.

24. Cylindre selon la revendication 15, **caractérisé en ce que** chacun des éléments de palier glissants (14, 14a), qui agissent radialement dans des directions opposées, est relié à un dispositif de régulation de pression de freinage (326, 326a), de telle sorte que, lorsque l'enveloppe de cylindre (12) s'approche de sa position extrême, le dispositif de régulation de pression de freinage (326, 326a) est prévu pour délivrer la pression de freinage dans les éléments de palier glissants (14, 14a) afin de freiner le mouvement de l'enveloppe de cylindre (12).

25. Cylindre selon la revendication 24, **caractérisé en ce que** le dispositif de régulation de pression de freinage (326, 326a) est relié aux éléments de palier glissants correspondants (14, 14a) de telle sorte que ledit dispositif de régulation (326, 326a) est relié afin d'être ouvert sous la commande positive et afin de permettre à la pression de freinage de passer vers les éléments de palier glissants (14, 14a), sur la base du mouvement de l'enveloppe de cylindre (12).

26. Cylindre selon la revendication 24, **caractérisé en ce que** le cylindre est pourvu de moyens de connecteur et de commande électriques et/ou électromagnétiques (340, 340a ; 341) qui sont reliés aux dispositifs de régulation de pression de freinage (326, 326a) de façon à ouvrir ledit dispositif de régulation (326, 326a) électriquement et permettre à la pression de freinage de passer vers l'élément de palier glissant correspondant (14, 14a) sur la base du mouvement de l'enveloppe de cylindre (12).

27. Cylindre selon la revendication 24, 25 ou 26, **caractérisé en ce que** le dispositif de régulation de pression de freinage (326) est une soupape qui est fermée lorsque l'enveloppe de cylindre (12) est dans une position normale, et empêche l'accès de la pression de freinage à l'élément de palier glissant (14, 14a) et qui est ouverte totalement lorsque l'enveloppe de cylindre (12) est au niveau de ou prés de sa position extrême, et permet à la pression de freinage complète d'agir sur l'élément de palier glissant (14, 14a).

28. Cylindre selon l'une quelconque des revendications 24, 25 ou 27, **caractérisé en ce que**, sur la partie de piston de l'élément de palier glissant (14, 14a), des éléments (321, 321a ; 324, 324a) ont été formés et ouvrent un passage depuis le dispositif de régulation de pression de freinage (326, 326a) vers l'élément de palier glissant (14, 14a) lorsque l'enveloppe de cylindre (12) est placée près de sa position extrême.

29. Cylindre selon la revendication 28, **caractérisé en ce que**, sur la partie de piston de l'élément de palier glissant (14, 14a), un axe (324, 324a) ou équivalent a été monté, qui ouvre la pièce de fermeture (331) de la soupape du dispositif de régulation (326) lorsque l'enveloppe de cylindre (12) est placée près de sa position extrême.

30. Cylindre selon l'une quelconque des revendications 24 à 29, **caractérisé en ce que** les éléments de palier glissants hydrauliques (14, 14a) sont disposés dans le plan de pincement (A) dans des directions opposées l'un par rapport à l'autre, et **en ce que** le cylindre est pourvu de manière additionnelle d'éléments de palier glissants (15, 15a) qui agissent dans la direction transversale au plan de pincement.

31. Cylindre selon l'une quelconque des revendications 24 à 29, **caractérisé en ce que** des éléments de palier glissant qui agissent sensiblement dans la direction de charge principale (A) sont disposés en paires et divergent de ladite direction de charge principale (A) vers une valeur importante d'une manière égale de chaque côté de ladite direction.

FIG. 1

FIG. 2

FIG. 2A

FIG. 3

**FIG. 3A**

EP 0 969 145 B1

FIG. 4

**FIG. 5**

EP 0 969 145 B1

FIG. 6

EP 0 969 145 B1

FIG. 7A

FIG. 7B

FIG. 8

**FIG. 9**

**FIG. 10**

FIG. 11

EP 0 969 145 B1

FIG. 12

41

**FIG. 12A**

**FIG. 13**

FIG. 14

**FIG. 15**

EP 0 969 145 B1

FIG. 16

EP 0 969 145 B1

**FIG. 17**

EP 0 969 145 B1

**FIG. 18**

EP 0 969 145 B1

FIG. 19A

FIG. 19B